(19) Europäisches Patentamt
European Patent Office
Office européen des brevets

(11) EP 2 796 042 A1

# (12) EUROPEAN PATENT APPLICATION

(43) Date of publication:
**29.10.2014 Bulletin 2014/44**

(51) Int Cl.:
***A01N 37/10*** *(2006.01)*

(21) Application number: **13164954.3**

(22) Date of filing: **23.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Albert-Ludwigs-Universität Freiburg**
**79085 Freiburg (DE)**

(72) Inventors:
- **Ditengou, Franck Anicet**
  **79194 Gundelfingen (DE)**
- **Palme, Klaus**
  **50259 Pulheim (DE)**
- **Ditengou, Beata Izabela**
  **79194 Gundelfingen (DE)**
- **Kochersperger, Philip**
  **79115 Freiburg (DE)**

(74) Representative: **Kalhammer, Georg**
**Lederer & Keller**
**Patentanwälte Partnerschaft mbB**
**Unsöldstrasse 2**
**80538 München (DE)**

## (54) Compounds promoting plant growth

(57) The present invention pertains to a method of promoting the growth of a plant and/or improving the stress tolerance of a plant, comprising applying to the plant a benzoic acid derivative. The invention further relates to the use of the benzoic acid derivatives as safeners to protect useful plants from undesired effects of herbicides.

EP 2 796 042 A1

Printed by Jouve, 75001 PARIS (FR)

## Description

BACKGROUND OF THE INVENTION

The present invention relates to the field of crop protection products. It is desirable to identify compounds which are capable of promoting the growth of plants, for example to increase the yield.

When controlling unwanted organisms in crop plant farming which are useful for agriculture or forestry by using pesticides (e.g. herbicides), the useful plants are frequently also damaged to some extent by the pesticides employed. This effect is encountered in particular with the use of a considerable number of herbicides in monocotyledonous and dicotyledonous crops of useful plants. In some instances, the useful plants can be protected against the undesired effects of the herbicides by employing safeners or antidotes, without diminishing the herbicidal activity against the harmful organisms. Only few commercial safeners for dicotyledonous crops have become known. Likewise, for a number of pesticides, hardly any safeners have been described.

It has now been found that, surprisingly, compounds of the formula (I) or (II) shown below or salts thereof can be used effectively as safeners for crop plants or useful plants against damage to these plants caused by agrochemicals, preferably from the group of the selective or non-selective herbicides. The invention thus provides chemical compounds which can be used as safeners. In addition, the compounds exhibit growth-promoting activity on plants.

SUMMARY OF THE INVENTION

The inventors surprisingly found that certain benzoic acid derivatives possess plant growth-promoting activity. It was further found that benzoic acid derivatives can overcome adverse effects of a herbicide on plant growth. The present invention therefore relates to the following subject matter, defined in items (1) to (50).

(1) A method of regulating plant growth, comprising applying to the plant a compound of Formula (I) or (II)

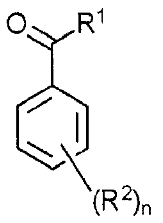 (I)

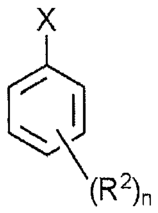 (II)

or a salt thereof,
wherein

n is 0, 1, 2, 3, 4 or 5,
X is $-OR^3$ or $-CO-R^1$,
$R^1$ is $-OR^3$, $-NR^4R^5$, halogen, or an aliphatic group,
each $R^2$ is independently selected from the group consisting of amino, nitro, cyano, halogen, alkyl, alkenyl, alkinyl, alkylamino, alkenylamino, alkinylamino, alkoxy, sulfonylamino, alkylsulfonylamino, amino-alkyl, amino-alkenyl, amino-alkinyl, hydroxycarbonyl, aminocarbonyl,
$R^3$ is hydrogen or an optionally substituted aliphatic group,
each of $R^4$ and $R^5$ is independently selected from the group consisting of hydrogen and optionally substituted alkyl;

in particular wherein

n is 0, 1, 2, 3, 4 or 5,
$R^1$ is $-OR^3$, $-NR^4R^5$, halogen, or a hydrocarbon chain with 1 to 6 carbon atoms,
each $R^2$ is independently selected from the group consisting of amino, nitro, cyano, halogen, $(C_1-C_6)$-alkyl, $(C_2-C_6)$-alkenyl, $(C_2-C_6)$-alkinyl, $(C_1-C_6)$-alkylamino, $(C_2-C_6)$-alkenylamino, $(C_2-C_6)$-alkinylamino, $(C_1-C_6)$-alkoxy, sulfonylamino, $(C_1-C_6)$-alkylsulfonylamino, amino-$(C_1-C_6)$-alkyl, amino-$(C_2-C_6)$-alkenyl, amino-$(C_2-C_6)$-alkinyl, hydroxycarbonyl, aminocarbonyl,
$R^3$ is hydrogen or optionally substituted $(C_1-C_6)$-alkyl,
each of $R^4$ and $R^5$ is independently selected from the group consisting of hydrogen and optionally substituted

($C_1$-$C_6$)-alkyl,

(2) A method of promoting plant growth, comprising applying to the plant a compound of Formula (I) or (II) or a salt thereof as defined in item (1).

(3) The method of item (1) or (2), further comprising applying a herbicide to the plant.

(4) The method of item (3), wherein the herbicide is glyphosate, glufosinate, chlorophenoxyacetic acid, pethoxamide, amidosulfuron,sulfuronmethyl, imidazoline or others.

(5) A method of improving the stress tolerance of a plant, comprising applying to the plant a compound of Formula (I) or (II) or a salt thereof as defined in item (1).

(6) The method item (5), wherein the stress tolerance is tolerance to one or more herbicides.

(7) The method of item (5) or (6), wherein the plant has been treated, is treated or is to be treated with a herbicide.

(8) The method of item (7), wherein the herbicide is glyphosate, glufosinate, chlorophenoxyacetic acid, pethoxamide, amidosulfuron,sulfuronmethyl, imidazoline or others.

(9) The method of item (5), wherein the stress is abiotic stress.

(10) The method of item (9), wherein the stress tolerance is tolerance to high or low temperature, or to droughtness.

(11) The method of any one of the preceding items, wherein n is 0, 1, 2, 3 or 4.

(12) The method of any one of the preceding items, wherein n is 0, 1, 2, or 3.

(13) The method of any one of the preceding items, wherein n is 0, 1 or 2.

(14) The method of any one of the preceding items, wherein n is 0 or 1.

(15) The method of any one of the preceding items, wherein n is 1.

(16) The method of any one of items (1) to (14), wherein n is 0.

(17) The method of item (16), wherein the compound is benzoic acid (BA).

(18) The method of any one of the preceding items, wherein $R^1$ is -OH or -$NH_2$.

(19) The method of any one of the preceding items, wherein $R^1$ is -OH.

(20) The method of any one of the preceding items, wherein each $R^2$ is independently selected from the group consisting of amino, cyano, and methyl.

(21) The method of any one of items (1) to (15) and (18) to (20), wherein each $R^2$ is amino.

(22) The method of item (21), wherein n is 1.

(23) The method of any one of items (1) to (15) and (18) to (20), wherein one group $R^2$ is attached to the carbon atom at position 4 of the aromatic ring.

(24) The method of item (23), wherein n is 1.

(25) The method of any one of items (1) to (15) and (18) to (24), wherein the compound is 4-aminobenzoic acid (pABA).

(26) The method of any one of items (1) to (15) and (18) to (20), wherein one group $R^2$ is attached to the carbon atom at position 3 of the aromatic ring and/or n is 1.

(27) The method of any one of items (1) to (26), wherein the $pK_a$ value of the compound is at least 4.0, preferably at least 4.5, most preferably at least 5.0.

(28) The method of item (27), wherein the compound is 3-aminobenzoic acid (mABA).

(29) The method of any one of the preceding items, wherein the compound of Formula (I) or (II) or a salt thereof is applied at a concentration of from 1 μM to 100 mM, preferably of from 100 μM to 10 mM.

(30) The method of any one of the preceding items, wherein the compound is applied to the roots of the plant, preferably by watering the cultured area.

(31) The method of any one of items (1) to (29), wherein the compound is applied to the foliage of the plant.

(32) The method of item (31), wherein the compound is sprayed onto the foliage of the plant.

(33) The method of any one of the preceding items, further comprising applying a plant growth regulator to the plant which is different from the compound of Formula (I) or (II) or a salt thereof.

(34) The method of any one of the preceding items, wherein the compound is applied to the plant once per day.

(35) The method of any one of the preceding item, wherein the total daily dose of the compound per plant is in the range from 1 μmol to 100 mmol, preferably from 10 μmol to 10 mmol, most preferably from 50 μmol to 1 mmol.

(36) The method of any one of the preceding items, wherein the plant is selected from the group consisting of corn, rice, wheat, barley, rye, oat, sorghum, cotton, soybean, peanut, buckwheat, beet, oilseed rape, sunflower, sugar cane, tobacco, and hop.

(37) The use of a compound of Formula (I) or (II) or a salt thereof as defined in any one of items (1) to (28) as a safener.

(38) The use of a compound of Formula (I) or (II) or a salt thereof as defined in any one of items (1) to (28) as a plant growth regulator.

(39) The use of a compound of Formula (I) or (II) or a salt thereof as defined in any one of items (1) to (28) as a plant growth promoter.

(40) An agrochemical composition comprising a compound of Formula (I) or (II) or a salt thereof as defined in any one of items (1) to (28).

(41) A plant safener composition comprising the compound of Formula (I) or (II) or a salt thereof as defined in any one of items (1) to (28).

(42) The composition of item (40) or (41), comprising the compound of Formula (I) or (II) or a salt thereof at a concentration of 10 μM to 10 mM.

(43) The composition of item (42), comprising the compound of Formula (I) or (II) or a salt thereof at a concentration of 100 μM to 1 mM.

(44) The composition of item (43), comprising the compound of Formula (I) or (II) or a salt thereof at a concentration of 500 μM to 1 mM.

(45) The composition of any one of items (40) to (44), further comprising a herbicide.

(46) The composition of item (44), wherein the herbicide is selected from the group consisting of glyphosate, glufosinate, chlorophenoxyacetic acid, pethoxamide, amidosulfuron, sulfuronmethyl, imidazoline or others.

(47) A method of detecting a receptor molecule binding to a compound of Formula (I) or (II) or a salt thereof as defined in any one of items (1) to (28), comprising (i) attaching the compound of Formula (I) or (II) or a salt thereof to a solid support to obtain a modified solid support, (ii) contacting the modified solid support with homogenized

plant material, (iii) identifying and optionally characterizing plant molecules bound to the modified solid support.

(48) The method of item (47), wherein the compound of Formula (I) or (II) is p-aminobenzoic acid (pABA).

(49) A method of determining the biologic activity of a compound of Formula (I) or (II) as defined in any one of items (1) to (28), comprising providing the compound of Formula (I) or (II) or a salt thereof and determining its plant growth promoting activity and/or its stress tolerance conferring activity.

(50) A method of screening for plant growth-promoting compounds and/or plant safeners, comprising providing a derivative of a compound of Formula (I) or (II) as defined in any one of items (1) to (28), and determining the plant growth promoting activity and/or the stress tolerance conferring activity of the derivative.

BRIEF DESCRIPTION OF THE DRAWINGS

**Figure 1.** pABA promotes lateral root, adventitious root and root hairs development. A-B, 10 day-old wild type *Arabidopsis thaliana* (L.) Heynh. ectoype Columbia (Col-0), grown in presence or absence of 200 μM pABA. A, Root hairs, adventitious and lateral root development. B, quantitation of lateral root development. C, *Lycopersicum esculentum* (tomato) grown in presence or absence of pABA. White arrows indicate adventitious roots, black arrows indicate lateral roots. Asterisk (*) indicates significant difference t>95%.

**Figure 2.** pABA promotes plant biomass formation when applied to *Arabidopsis thaliana.*

**Figure 3.**pABA promotes plant biomass formation when applied to Zea *mays.* Asterisk (*) indicates significant difference t>95%.

**Figure 4.**Visualization of tissue specific production and metabolization of para-aminobenzoic acid (pABA). (A) Folate pathway with pABA synthesis by GAT-ADCS (*), esterification by UGT75B (**) and fusion to pterin by HPPK-DHPS (***). (B) Schematic representation of pABA. (C) Tissue expression of *GAT-ADCS* and *HPPK-DHPS* in *Arabidopsis thaliana* seedlings. *GAT-ADCS* and *HPPK-DHPS* are coexpressed in the same tissues. (D) *GAT-ADCS* and *HPPK-DHPS* expression in the root tip. Left, for short time staining (30 min), *GAT-ADCS* was expressed in columella and lateral root cap cells (#). Middle, when stained for longer time (3h), *GAT-ADCS* expression domain is extended to epidermal (white *) and cortex (black *) cells. Right, *HPPK-DHPS* promoter activity. *HPPK-DHPS* promoter activity globally matches *GAT-ADCS* promoter expression pattern.

**Figure 5.** Expression of *GAT-ADCS* in pollen and female gametophyte during early embryogenesis. (A) *pGAT-ADCS::GUS* signal in pollen grains. (B) *GAT-ADCS* expression in female gametophyte. (C) *GAT-ADCS* expression in seed with embryo at beginning of globular stage. (D) Enlargement of boxed area in C. Note endosperm-derived GUS signal (*) surrounding the embryo. (E) *GAT-ADCS* expression in seed with embryo at late globular stage. Note drastic reduction of *GAT-ADCS* expression in endosperm, while GUS signal has appeared in embryo. (F) Enlargement of boxed area in E. (G) *GAT-ADCS* expression in seed with embryo at heart stage. (H) Enlargement of boxed area in G.

**Figure 6.** Characterization of *GAT-ADCS.* (A) *GAT-ADCS* (At2g28880) gene model (6.5 kb) including promoter, UTR, introns, exons and T-DNA insertions. (B) T-DNA insertion in *adcs2* mutant shown by PCR. (C) Abnormal seeds (*) in opened siliques in *adcs2.* (D) Seeds ratio indicating wild-type (WT)-like and defective seeds in *adcs2.* (E) Globular stage arrest of adcs2 embryos (arrowed). (F) Complementation of adcs2 (line 10, 11 and 17) with WT ADCS sequence shown by PCR, T-DNA is present in *adcs2* but absent in WT, while *pGAT-ADCS::ADCS* construct can be detected in mutants but not in WT. (G) Confirmation of complementation of lines 10, 11 and 17 with *pGAT-ADCS::ADCS.* WT *GAT-ADCS* sequence complements *adcs2* globular stage arrest, shown by a drop of defective seeds from 25% to 6.25% for the lines 10 and 17. Line 11 probably contains double *pGAT-ADCS::ADCS* insertions, indicated by a drop of defective embryos from 25% to 1.56%. Scale bar = 500μm (C) and 100μm (E).

**Figure 7.** Characterization of *adcs-1.* WT and adcs-1 seedlings growing on AM medium. Scale bar=1cm.

**Figure 8.** Homozygous adcs2 rescue experiment with pABA. (A) *adcs2* opened silique incubated on ppABA supplemented medium.(B) Embryo development and germination 3 weeks later. (C) One week after germination, difference in growth become apparent (left WT, right *adcs* knockout). (D) Magnified view of boxed area in (C) 3 weeks after germination. Note that shoot parts (arrow) not in contact with pABA supplemented medium do not develop. Scale bar = 100 μm in A, B, D and 1 cm in C.

**Figure 9.** Conditional down regulation of *ADCS*. (A) 20μM estradiol (EST20) induction results in down regulation of *GAT-ADCS* expression. (B) EST application induces root growth arrest of 9 day-old *ADCS*-RNAi seedlings. (C) Growth arrest can be rescued by growing plants for 6 days in either 50μM pABA or 50μM 5-formyl tetrahydrofolate (5-FTHF). The letters indicate independent groups according to one-way analysis of variance test (C). Scale bar=1 cm. Mock (AM + ethanol).

**Figure 10.** Regulation of plant growth by exogenous application of pABA. (A) Root growth of 6 day-old *Arabidopsis thaliana* in presence of increasing concentrations of pABA. Root growth is repressed by pABA. (B) Arabidopsis seedlings growing on AM, 100μM pABA and 100μM 5-FTHF supplemented media. (C) Percentage of emerged adventitious (AR) and lateral (LR) roots on AM, pABA and 5-FTHF supplemented media. pABA induces development of LR and AR. (D) Stimulation of root hair elongation by pABA. (E) Quantification of root hair size. pABA treatment increases root hair length. (F) Root growth of 6 day-old Arabidopsis grown in presence of 100μM pABA, 100μM 5-FTHF and 100μM of the folate synthesis inhibitor Sulfanilamide (Sulf). Root growth inhibition by Sulf is reverted by both 5-FTHF and pABA. (G) Root response to gravity after rotating plates bearing roots to 135° for 3h in AM, pABA, and 5-FTHF supplemented media. pABA increases gravitropic response of Arabidopsis primary root. Scale bars = 0.5 cm (b) and 500 μm (f). The asterisk indicates a significant difference from control by Student's test ($p< 0.01$)(E).The letters indicate independent groups according to one-way analysis of variance test (F).

**Figure 11**.Quantification of free pABA and pABA-Gluc in Arabidopsis seedlings. (A) pABA in WT. (B) pABA in *ugt75B* mutant. (C) pABA in non-induced Lex::UGT75B. (D) pABA in Lex::UGT75B seedlings induced with 1 μM estradiol. With estradiol concentration higher than 1 μM the growth is limited and it is difficult to get enough plant material for pABA determinations. Each value is the average of three independent experiments ±SD. The asterisk indicates a significant difference from control by Student's test ($p< 0.01$).

**Figure 12.** *GAT-ADCS, HPPK-DHPS* and *UGT75B* expression domains in Arabidopsis root tip. (A) *GAT-ADCS, (B) HPPK-DHPS* expression pattern. (C) UGT75B expression pattern. UGT75B::3xYFP is expressed in whole root tip except in the stele, columella cells and the QC. (D) Close-up of root presented in C. UGT75B::3xYFP signal is mainly present in lateral root cap (LRC), epidermis (Ep) and cortex (co) cells. Scale bars = 50μm (in A, B, C), 20μm (in D).

**Figure 13.** Impact of pABA-conjugation on root development. (A-B) Quantification of adventitious root (AR) and root length of *ugt75b* mutant and WT in presence of pABA. (A) AR, (B) root length. *ugt75b* roots are more sensitive to pABA. (C) Induction of Lex::UGTB75B with EST followed by RT-PCR. (D) Severe root growth defects after strong induction of Lex::UGTB75B with 20μM EST. (E) Root growth phenotype upon weak induction of Lex::UGTB75B with 0.1μM EST in presence of 200 μM pABA and 200μM 5-FTHF. pABA rescues effects of over expressed Lex::UGTB75B but not 5-FTHF. (F) Quantification of root slanting in presence of pABA and 5-FTHF respectively, after EST-weak induction of Lex::UGT75B. (G) Quantification of root growth in presence of pABA and 5-FTHF after EST-weak induction of Lex::UGT75B. Mock (AM +ethanol).The asterisk indicates a significant difference from control by Student's test ($p< 0.05$)(B). The letters indicate independent groups according to one-way analysis of variance test (F-G).

**Figure 14.** Impact of pABA conjugation on root development. Arabidopsis seedlings growing for 9 days in presence of 20μM EST. (A) Strong EST induction ofLex::UGTB75B results in severe root growth defects which can be only partially rescued by 400μM pABA and very poorly by 5-FTHF applied at the same concentration. (B) Quantification of root length. Mock (AM + ethanol).The letters indicate independent groups according to one-way analysis of variance test (B). Scale bar = 1 cm.

**Figure 15.** Root development and auxin distribution. (A) Root development of WT and Lex::UGT75B seedlings grown in presence of EST, or EST supplemented with 250μM pABA or 1 mM5-FTHF. (B) PIN1 (red) and PIN2 (green) subcellular localization in roots of WT and Lex::UGT75B grown in presence of EST, or EST supplemented with 250μM pABA, 1 mM5-FTHF. Epidermis (Ep), Cortex (Co), Endodermis (En).Scale bar = 20 μm.

**Figure 16.** Auxin response in root tips of p*DR5::GUS*andLex::*UGT75B* transgenic plants. (A-B) p*DR5::GUS* plants displaying typical auxin maximum in QC and columella cells. (A) Mock (AM+ethanol) treated p*DR5::GUS* plants.

(B) p*DR5::GUS*plants transferred for 48 hours to growth medium supplemented with 5μM EST. (C-D) p*DR5::GUS* in Lex::UGT75B transgenic plants. (C) Non induced and (D) after induction with 5μM EST. Note ectopic DR5 signal in LRC initials (arrowed).

**Figure 17.** Safener activity of pABA on Arabidospsis thaliana seedlings grown in presence of inhibitory concentrations of auxins showing antagonism of pABA with auxins. Lower panel: quantification of root length and structures of molecules used (Example 5).

**Figure 18.** Safener activity of benzoic acid derivatives on Arabidospsis thaliana seedlings grown in presence of inhibitory concentrations of auxins (Example 5).

**Figure 19.** Activity of benzoic acid derivatives on Arabidopsis root development (Example 5).

DETAILED DESCRIPTION

*Definitions*

The term "aliphatic group", as used herein, includes saturated or unsaturated, branched or unbranched aliphatic monovalent or bivalent groups. In the present application, aliphatic group is intended to include, but is not limited to, alkyl, cycloalkyl, alkenyl, and alkinyl groups. According to the present invention, the aliphatic group has 1 to 100, preferably 1 to 42 carbon atoms, preferably 1 to 22 carbon atoms, more preferred 1 to 15 carbon atoms, further preferred 1 to 10 carbon atoms, even more preferred 1 to 6 carbon atoms, for instance 1, 2, 3 or 4 carbon atoms. Most preferably, the aliphatic group is $C_{1-6}$-alkyl, e.g. methyl, ethyl, propyl and butyl. Aliphatic groups as used herein, include heteroaliphatic groups in which one or more carbon atoms have been substituted with a heteroatom, for instance, with an oxygen, sulfur, nitrogen, phosphorus or silicon atom, wherein the nitrogen and sulfur atoms may optionally be oxidized, and the nitrogen heteroatom may optionally be quaternized. The heteroatom(s) O, N and S may be placed at any interior position of the heteroaliphatic group. Examples include $-CH_2-CH_2-O-CH_3$, $-CH_2-CH_2-NH-CH_3$, $-CH_2-CH_2-N(CH_3)-CH_3$, $-CH_2-S-CH_2-CH_3$, $-S(O)-CH_3$, $-CH_2-CH_2-S(O)_2-CH_3$, $-CH=CH-O-CH_3$, $-CH_2-CH=N-OCH_3$, and $-CH=CH-N(CH_3)-CH_3$. A heteroaliphatic group may be linear or branched, and saturated or unsaturated.

The term "alkyl" used is the present application relates a saturated branched or unbranched aliphatic monovalent substituent. Preferably, the alkyl group has 1 to 100 carbon atoms, more preferred 1 to 22 carbon atoms, further preferred 1 to 10 carbon atoms, yet more preferred 1 to 6 carbon atoms, even more preferred 1 to 3 carbon atoms. Accordingly, examples of the alkyl group include methyl, ethyl, *n*-propyl, isopropyl, *n*-butyl, isobutyl, *sec*-butyl, *tert*-butyl, *n*-pentyl and *n*-hexyl and preferable examples include methyl, ethyl, *n*-propyl and isopropyl, whereby ethyl and isopropyl are particularly preferred.

As used herein, the term "cycloalkyl" refers to a monocyclic, bicyclic, or tricyclic group, which may be saturated or partially saturated, *i.e.* possesses one or more double bonds. Monocyclic groups are exemplified by a saturated cyclic hydrocarbon group containing from 3 to 8 carbon atoms. Examples of monocyclic cycloalkyl groups include cyclopropyl, cyclobutyl, cyclopentyl, cyclopentenyl, cyclohexyl, cyclohexenyl, cycloheptyl and cyclooctyl. Bicyclic fused cycloalkyl groups are exemplified by a cycloalkyl ring fused to another cycloalkyl ring. Examples of bicyclic cycloalkyl groups include, but are not limited to decalin, 1,2,3,7,8,8a-hexahydro-naphthalene, and the like. Tricyclic cycloalkyl groups are exemplified by a cycloalkyl bicyclic fused ring fused to an additional cycloalkyl group.

The term "alkenyl" as used is the present application is an unsaturated branched or unbranched aliphatic monovalent group having at least one double bond between two adjacent carbon atoms. Preferably, the alkenyl group has 2 to 6 carbon atoms, more preferred 2 to 4 carbon atoms. Accordingly, examples of the alkenyl group include but are not limited to ethenyl, 1-propenyl, 2-propenyl, methylvinyl, 1-butenyl, 2-butenyl, 3-butenyl, 2-methyl-1-propenyl, 2-methyl-2-propenyl, 2-pentenyl, 2-hexenyl. Preferable examples of the alkenyl group include ethenyl, 1-propenyl and 2-propenyl, whereby ethenyl is particularly preferred. The term "alkenyl" includes alkadienyl groups having two double bonds. Preferably, the alkadienyl group has 4 to 10 carbon atoms. Accordingly, examples of the alkadienyl group include but are not limited to 2,4-pentadienyl, 2,4-hexadienyl, 4-methyl-2,4-pentadienyl, 2,4-heptadienyl, 2,6-heptadienyl, 3-methyl-2,4-hexadienyl, 2,6-octadienyl, 3-methyl-2,6-heptadienyl, 2-methyl-2,4-heptadienyl, 2,8-nonadienyl, 3-methyl-2,6-octadienyl, 2,6-decadienyl, 2,9-decadienyl and 3,7-dimethyl-2,6-octadienyl groups, whereby 2,4-pentadienyl is particularly preferred.

The term "alkinyl" as used is the present application is an unsaturated branched or unbranched aliphatic monovalent group having at least one triple bond between two adjacent carbon atoms. Preferably, the alkinyl group has 2 to 6 carbon atoms, more preferred 2 to 4 carbon atoms. Examples of the alkinyl group include but are not limited to ethinyl, 1-propinyl, 1-butinyl, 2-butinyl, 1-pentinyl, 2-pentinyl, 3-pentinyl and 2-hexinyl. Preferable examples of the alkenylene group include ethinyl, 1-propinyl and 2-propinyl, whereby ethinyl is particularly preferred.

The terms "halo" and "halogen" refer to a halogen atom selected from the group consisting of F, Cl, Br and I. Preferably the halogen atom is Cl or Br, whereby Cl is particularly preferred. The term "halogenated alkyl group" refers to an alkyl groups as defined above which is substituted with at least one halogen atom. In a preferred embodiment, the halogenated alkyl group is perhalogenated. In a more preferred embodiment, the halogenated alkyl group is a univalent perfluorated group of formula $C_nF_{2n+1}$. Preferably, the halogenated alkyl group has 1 to 6 carbon atoms, even more preferred 1 to 3 carbon atoms. Accordingly, examples of the alkyl group include trifluoromethyl, 2,2,2-trifluoroethyl, n-perfluoropropyl, n-perfluorobutyl and n-perfluoropentyl. Preferable examples of halogenated alkyl groups include trifluoromethyl and 2,2,2-trifluoroethyl, whereby trifluoromethyl is particularly preferred.

The $pK_a$ value is equal to $-\log_{10} K_a$, wherein $K_a$ is the dissociation constant which defines the ratio of the concentrations of the dissociated ions and the undissociated acid:

$$K_a = \frac{[A^-][H^+]}{[HA]}$$

Methods of determining the $pK_a$ for a compound will be readily understood by the skilled artisan. Some compounds include more than one acidic hydrogen and therefore have more than a single $pK_a$ value. According to the invention, the relevant and referred to $pK_a$ is the highest $pK_a$ of a compound. If the compound is a compound of Formula (I) wherein $R^1$ is OH, then the $pK_a$ value preferably refers to the $pK_a$ value of the carboxylic group -CO-$R^1$. If the compound is a compound of Formula (II) wherein X is COOH, then the $pK_a$ value preferably refers to the $pK_a$ value of the carboxylic group X.

The term 'safener', as used herein, refers to compounds which compensate for, or reduce, the phytotoxic properties of a pesticide (e.g. a herbicide) toward useful plants without essentially reducing the herbicidal action against harmful plants.

The present invention relates to a method of promoting the growth of a plant and/or improving the stress tolerance of a plant. The method preferably comprises applying to the plant a compound of Formula (II)

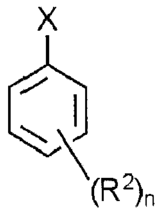

(II)

wherein

n is 0, 1, 2, 3, 4 or 5,
X is -$OR^3$ or -CO-$R^1$,
$R^1$ is -$OR^3$, -$NR^4R^5$, halogen, or an aliphatic group,
each $R^2$ is independently selected from the group consisting of amino, nitro, cyano, halogen, alkyl, alkenyl, alkinyl, alkylamino, alkenylamino, alkinylamino, alkoxy, sulfonylamino, alkylsulfonylamino, amino-alkyl, amino-alkenyl, amino-alkinyl, hydroxycarbonyl, aminocarbonyl, halogenated alkyl, aryl, heteroaryl,
$R^3$ is hydrogen or an optionally substituted aliphatic group,
each of $R^4$ and $R^5$ is independently selected from the group consisting of hydrogen and optionally substituted alkyl.

In a preferred embodiment, the compound is a compound of Formula (I)

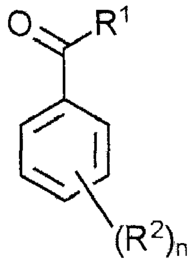
(I)

or a salt thereof,
wherein n, $R^1$, $R^2$, $R^3$, $R^4$ and $R^5$ are defined as above for Formula (II).

The parameter n may be 0, 1, 2, 3, 4 or 5. Preferably, n is selected from 0, 1, 2, 3, and 4; more preferably n is selected from 0, 1, 2, and 3; still more preferably, n is selected from 0, 1, and 2; most preferably n is 1.

Group X of formula (II) can be $-OR^3$ or $-CO-R^1$. Preferably, group X is $-CO-R^1$, as indicated in Formula (I).

$R^1$ is typically selected from the group consisting of $-OR^3$, $-NR^4R^5$, halogen, and an aliphatic group. Preferably, $R^1$ is $-OR^3$.

$R^3$ can be hydrogen or an optionally substituted aliphatic group. Preferably, $R^3$ is hydrogen or an optionally substituted alkyl group; more preferably, $R^3$ is hydrogen or an optionally substituted $C_1$-$C_6$ alkyl group. Still more preferably, $R^3$ is hydrogen or $C_1$-$C_6$ alkyl. Most preferably, $R^3$ is hydrogen. Accordingly, group X most preferably is -COOH.

Group $R^2$ is, for each occurrence of $R^2$, independently selected from the group consisting of amino, nitro, cyano, halogen, alkyl, alkenyl, alkinyl, alkylamino, alkenylamino, alkinylamino, alkoxy, sulfonylamino, alkylsulfonylamino, amino-alkyl, amino-alkenyl, amino-alkinyl, hydroxycarbonyl, aminocarbonyl, halogenated alkyl, aryl, heteroaryl.

Preferably, group $R^2$ is selected from the group consisting of amino, nitro, cyano, halogen, ($C_1$-$C_6$)-alkyl, ($C_2$-$C_6$)-alkenyl, ($C_2$-$C_6$)-alkinyl, ($C_1$-$C_6$)-alkylamino, ($C_2$-$C_6$)-alkenylamino, ($C_2$-$C_6$)-alkinylamino, ($C_1$-$C_6$)-alkoxy, sulfonylamino, ($C_1$-$C_6$)-alkylsulfonylamino, amino-($C_1$-$C_6$)-alkyl, amino-($C_2$-$C_6$)-alkenyl, amino-($C_2$-$C_6$)-alkinyl, hydroxycarbonyl, aminocarbonyl.

More preferably, group $R^2$ is selected from alkyl, amino and aminoalkyl; still more preferably, group $R^2$ is selected from amino and $C_1$-$C_6$ alkyl, e.g. methyl, ethyl, n-propyl, isopropyl, n-butyl, *tert*-butyl etc. Most preferably, group $R^2$ is amino.

In one embodiment, the compound of the invention comprises at least one substituent $R^2$ in para position (position 4 of the phenyl ring), e.g. the compound 4-aminobenzoic acid. In another embodiment, the compound of the invention comprises at least one substituent $R^2$ in meta position (position 3 of the phenyl ring), e.g. the compound 3-amino benzoic acid. In yet another embodiment, the compound of the invention comprises at least one substituent $R^2$ in *ortho* position (position 2 of the phenyl ring), e.g. the compound 2-amino benzoic acid.

In yet another embodiment, n is 1 and group $R^2$ is bound to the phenyl ring in para position. In another embodiment, n is 1 and group $R^2$ is bound to the phenyl ring in *meta*- or *ortho*-position.

In a specific embodiment n is 2 and each of the two groups $R^2$ is bound to the phenyl ring in meta-position (positions 3 and 5 of the phenyl ring).

In one embodiment of the invention the compound of the invention is a compound of Formula (III)

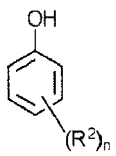
(III)

or a salt thereof, wherein n and $R^2$ have the same meaning as defined above.

In another embodiment, the compound of the invention is a compound of Formula (IV)

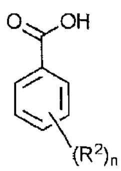
(IV)

or a salt thereof, wherein $R^2$ has the same meaning as defined above.

In another embodiment, the compound of the invention is a compound of Formula (V)

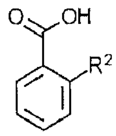

(V)

or a salt thereof, wherein $R^2$ has the same meaning as defined above.

In another embodiment, the compound of the invention is a compound of Formula (VI)

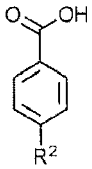

(VI)

or a salt thereof, wherein $R^2$ has the same meaning as defined above.

In another embodiment, the compound of the invention is a compound of Formula (VII)

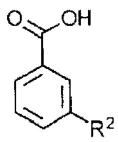

(VII)

or a salt thereof, wherein $R^2$ has the same meaning as defined above.

In another embodiment, the compound of the invention is a compound of Formula (VIII)

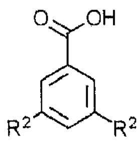

(VIII)

or a salt thereof, wherein $R^2$ has the same meaning as defined above.

In another embodiment, the compound of the invention is a compound of Formula (IX)

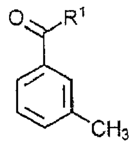

(IX)

or a salt thereof, wherein $R^1$ has the same meaning as defined above.

In another embodiment, the compound of the invention is a compound of Formula (X)

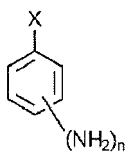

(X)

or a salt thereof, wherein n and X have the same meaning as defined above.

In another embodiment, the compound of the invention is a compound of Formula (XI)

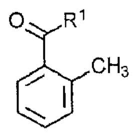 (XI)

or a salt thereof, wherein $R^1$ has the same meaning as defined above.

In another embodiment, the compound of the invention is a compound of Formula (XII)

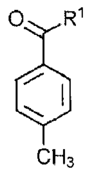 (XII)

or a salt thereof, wherein $R^1$ has the same meaning as defined above.

In another embodiment, the compound of the invention is a compound of Formula (XIII)

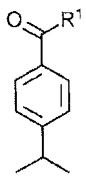 (XIII)

or a salt thereof, wherein $R^1$ has the same meaning as defined above.

In another embodiment, the compound of the invention is a compound of Formula (XIV)

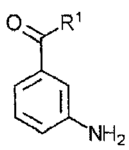 (XIV)

or a salt thereof, wherein $R^1$ has the same meaning as defined above.

In another embodiment, the compound of the invention is a compound of Formula (XV)

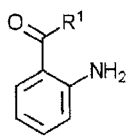 (XV)

or a salt thereof, wherein $R^1$ has the same meaning as defined above.

In another embodiment, the compound of the invention is a compound of Formula (XVI)

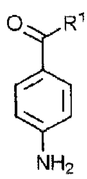 (XVI)

or a salt thereof, wherein $R^1$ has the same meaning as defined above.

In another embodiment, the compound of the invention is a compound of Formula (XVII)

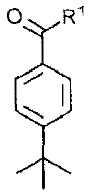

(XVII)

or a salt thereof, wherein $R^1$ has the same meaning as defined above.

In another embodiment, the compound of the invention is a compound of Formula (XVIII)

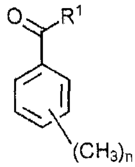

(XVIII)

or a salt thereof, wherein n and $R^1$ have the same meaning as defined above.

In another embodiment, the compound of the invention is a compound of Formula (XIX)

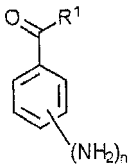

(XIX)

or a salt thereof, wherein n and $R^1$ have the same meaning as defined above.

In another embodiment, the compound of the invention is a compound of Formula (XX)

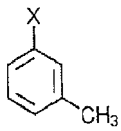

(XX)

or a salt thereof, wherein X has the same meaning as defined above.

In another embodiment, the compound of the invention is a compound of Formula (XXI)

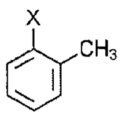

(XXI)

or a salt thereof, wherein X has the same meaning as defined above.

In another embodiment, the compound of the invention is a compound of Formula (XXII)

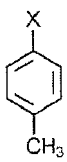

(XXII)

or a salt thereof, wherein X has the same meaning as defined above.

In another embodiment, the compound of the invention is a compound of Formula (XXIII)

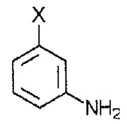 (XXIII)

or a salt thereof, wherein X has the same meaning as defined above.

In another embodiment, the compound of the invention is a compound of Formula (XXIV)

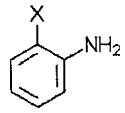 (XXIV)

or a salt thereof, wherein X has the same meaning as defined above.

In another embodiment, the compound of the invention is a compound of Formula (XXV)

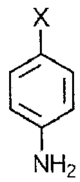 (XXV)

or a salt thereof, wherein X has the same meaning as defined above.

In another embodiment, the compound of the invention is a compound of Formula (XXVI)

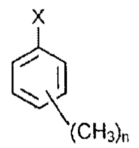 (XXVI)

or a salt thereof, wherein X and n have the same meaning as defined above.

It is preferred that the compounds of the invention have at least one acidic hydrogen atom which can dissociate as $H^+$ in dependence of the pH.

Preferably, the compound in accordance with this invention has a $pK_a$ value of at least 4.0, preferably of at least 4.25, more preferably of at least 4.5, still more preferably of at least 4.75, most preferably of at least 5.0. Typically, the $pK_a$ value ranges from 4.0 to 10.0, preferably from 4.5 to 8.0, most preferably from 5.0 to 7.0. The inventors surprisingly found that there is a correlation between the $pK_a$ value of the compound and its activity as plant growth promoter and safener. Compounds having a $pK_a$ value of at least 5 turned out to be most active.

Examplary compounds of the invention include, but are not limited to, the following compounds and salts thereof:

2-Methylbenzoic acid; 2-Ethylbenzic acid; 3-Methylbenzoic acid; 3-Ethylbenzic acid; 4-Methylbenzoic acid; 4-Ethylbenzic acid; 3,5-Dimethylbenzoic acid; 3,5-Diethylbenzoic acid; 2,6-Dimethylbenzoic acid; 2,6-Diethylbenzoic acid; 3,5-Di-*tert*-butylbenzoic acid, 2-*tert*-butylbenzoic acid, 3-*tert*-butylbenzoic acid, 4-*tert*-butylbenzoic acid;
Biphenyl-4-carboxylic acid;
4-((Methylthio)benzoic acid; 3-(Methylthio)benzoic acid; 2-(Methylthio)benzoic acid;
2-Methoxybenzoic acid; 3-Methoxybenzoic acid; 4-Methoxybenzoic acid; 3,5-Dimethoxybenzoic acid; 3,4,5-Trimethoxybenzoic acid;
2-isopropylbenzoic acid; 3-Isopropylbenzoic acid; 4-isopropylbenzoic acid; 3,5-Di-isopropylbenzoic acid;
3-Hydroxybenzoic acid, 4-Hydroxybenzoic acid, 3,4-Dihydroxybenzoic acid, 3,5-Dihydroxybenzoic acid, 3,4,5-Trihydroxybenzoic acid;
4-Aminobenzoic acid, 2-Aminobenzoic acid, 3-Aminobenzoic acid, 3,5-Diaminobenzoic acid, 3,4-Diaminobenzoic acid;
4-((Methylamino)benzoic acid, 2-(Methylamino)benzoic acid, 3- (Methylamino)benzoic acid,

3,5-Di-(methylamino)benzoic acid, 3,4-Di-(methylamino)benzoic acid, procaine;
4-((Dimethylamino)benzoic acid, 2-(Dimethylamino)benzoic acid, 3-(Dimethylamino)benzoic acid, 3,5-Di-(methylamino)benzoic acid, 3,4-Di-(methylamino)benzoic acid.

Further active compounds of the invention (CAS numbers in parentheses, where applicable) include 4-Nitrophenol, 3-Nitrophenol, 2-Nitrophenol, Ascorbic acid, Dimedon, Meldrums acid, Dinitropyrazol, 3-Nitro-1,2,4-triazol, Benzotriazol, Acetylsalicylic acid, Chlorothiazide, Chloroazepine acid, Cyclobutane carboxylic acid, Cyclohexandion-1,3, Diclofenac, Piperonylic acid, 2,3-dihydro-1,4-benzodioxine-6-carboxylic acid (4442-54-0), 1,2,3,4-tetrahydro-6-quinolinecarboxylic acid (5382-49-0), 4-morpholinobenzoic acid (7470-38-4), 4-(1H-imidazol-1-yl)benzoic acid (17616-04-5), Isonipecotic acid, 4-pyridyl carboxylic acid, 2-methyl-6-quinolinecarboxylic acid (635-80-3), 2-Methyl-1H-benzimidazole-5-carboxylic acid (709-19-3), Indole-5-carboxylic acid (1670-81-1), and 1-benzothiophene-5-carboxylic acid (2060-64-2).

Another aspect of the invention is the use of a compound as defined herein as a plant growth promotor.

The invention also provides a method for protecting crop plants or useful plants against phytotoxic actions of agrochemicals, such as herbicides, which method comprises using compounds of the formula (I) or (II) or salts thereof as safeners, preferably by applying an effective amount of the compounds of the formula (I) or (II) or salts thereof to the plants, to parts of plants or seeds thereof.

For the joint use with agrochemicals/herbicides, the compounds of the formula (I) or (II) according to the invention or salts thereof can be applied simultaneously with the active compounds or in any order, and they are then capable of reducing or completely eliminating harmful side effects of these active compounds in crop plants, without negatively affecting or substantially reducing the activity of these active compounds against unwanted harmful organisms. Here, even damage caused by using a plurality of herbicides, insecticides or fungicides, or herbicides in combination with insecticides or fungicides, can be reduced substantially or eliminated completely. In this manner, it is possible to extend the field of use of conventional pesticides considerably.

If the agrochemical compositions according to the invention comprise herbicides, these compositions are, after appropriate dilution, applied either directly to the area under cultivation, to the already germinated harmful and/or useful plants or to the already emerged harmful and/or useful plants. If the compositions according to the invention do not comprise any herbicide, these compositions can be employed by the tank mix method (i.e. the user mixes and dilutes the separately available products (the herbicide and the safener) immediately prior to application to the area to be treated, or prior to the application of a herbicide, or after the application of a herbicide, or for the pretreatment of seed, for example, for dressing the seed of the useful plants.

The compounds according to the invention can be applied together with the herbicides by the pre-emergence method or the post-emergence method, for example in the case of simultaneous application as a tank mix or a co-formulation or in the case of a separate application, in parallel or in succession (split application). It is also possible to repeat the application a number of times. In some cases, it may be expedient to combine a pre-emergence application with a post-emergence application. In most cases, one option is a post-emergence application to the useful plant or crop plant together with a simultaneous or later application of the herbicide. Also possible is the use of the compounds according to the invention or salts thereof for seed dressing, for (dip) treatment of seedlings or for the treatment of other propagation material (for example potato tubers).

Herbicides whose undesired side effects on useful plants can be reduced using compounds of the formula (I) or (II) or salts thereof can be from entirely different structural classes and have entirely different mechanisms of action. Preference is given to commercially available herbicides as described, for example, in the handbook "The Pesticide Manual", 13th Edition 2003, The British Crop Protection Council, and in "Modern Crop Protection Compounds", edited by Wolfgang Krämer and Ulrich Schirmer, Volume 1 (ISBN 978-3-527-31496-6).

Non-limiting examples of herbicides in relation to which the composition of the present invention may be useful include aminopyralid, glufosinate ammonium, fluroxypyr, imazapic, pendimethlin, sodium chlorate, chloroacetamindes such as metalchlor, acetochlor, butachlor, propachlor, thenylchlor; amides such as dimethenamid, propanil, naptalam, pronamide, bensulide, pethoxamid; organoarsenicals such as cacodylic acid and its sodium salt, disodium methanearsonate, monosodium methanearsonate; benzoic acids and derivatives thereof such as dicamba, chlorfenac, chloramben; nitriles such as dichlobenil and bromoxynil, 2,6-dichlorobenzonitrile, loxynil; benzothiadiazoles such as bentazone; bipyridyliums such as diquat, paraquat, difenzoquat; carbamates such as propham, chloropropham, asulam; phenylcarbamates such as phenmedipham, desmedipham; chlorinated aliphatic acids such as TCA, dalapon; cyclohexanediones such as sethoxydim, clethodim, cycloxydim, tralkoxydim, tepraloxydim; dinitroanilines such as benefin, oryzalin, pendimethalin, isopropalin; dinitrophenols such as DNOC, DINOSEB; diphenyl ethers such as nitrophen, bifenox, fomesafen, acifluorfen, lactofen, oxyfluorfen; imidazolinones such as imazamox, imazapyr, imazaquin, imazamethabenz-methyl, imazethapyr; triazolopyrimidines such as fiumetsulam, metosulam, chloransulam, disclosulam; aryloxphenoxy propionates such as fluazifop- butyl, propaquizafop, quizalofop-P, metamifop, pyriftalid; phenoxys such as 2,4-D, 2,4,5-T, 2,4-DB, MCPA, silvex, 2,4-DP, MCPB, MCPP; ureas such as fluometuron, linuron, diuron and monuron, fenuron-TCA, siduron, tebuthiuron, isoproturon, cumyluron; phosphono amino acids such as glyphosate, glufosinate, fosamine

and glyphosate trimesium; phthalic acid such as chlorthal, endothall; pyridazinones such as pyrazon, norflurazon, fluridone, fluorochloridone, clomazone, oxadiazon, beflubutamid, picolinafen, oxadiargyl; carboxylic acids such as picloram, triclopyr, fluoroxypyr, clopyralid, quinclorac; pyridines such as dithiopyr, thiazopyr; sulfonylureas such as chlorsulfuron, chlorimuron-ethyl, metsulfuron-methyl, sulfometuron-methyl, halosulfuron-methyl, sulfometuron-methyl, bensulfuron, nicosulfuron, triasulfuron, primisulfuron-methyl, amidosulfuron, azimsulfuron, cyclosulfamuron, ethametsulfuron-methyl, ethoxysulfuron, flupyrsulfuron-methyl, foramsulfuron, iodosulfuron-methyl, mesosulfuron-methyl, oxasulfuron, prosulfuron, rimsulfuron, sulfosulfuron, tribenuron-methyl, trifloxysufuron, triflusulfuron-methyl, tritosulfuron, foramsulfuron, iodosulfuron-methyl, thiocarbamates such as EPTC, pebulate, thiobencarb, butylate, cycloate, molinate, vernolate, diallate, triallate; triazines such as atrazine, prometryn, ametryn, and terbutryne; triazinones such as metribuzin and hexazinone; triazoles such as amitrol; uracils such as bromacil, terbacil, lenacil; benzoylcyclohexanediones such as mesotrione, sulcotrione, benzofenap; N-phenyl-phthalimides-cinidon-ethyl; oxazolidinediones such as pentoxazone; phenyl-pyrazoles such as pyraflufen-ethyl; pyrimidindiones such as butafenacil; sulfonyamino-carbonyl-triazolinones such as flucarbazone, propoxycarbazone; tetrazolinones such as fentrazamide; triazolinones such as amicarbazone; flufenpyr-ethyl; oxoziclomefone; benzobicyclon; soaps; petroleum oils.

Preferred herbicides which can be applied to the plant in combination with the safener compound of this invention include acetochlor, alachlor, asulam, benfluralin, butachlor, diethatyl, diflufenican, dimethenamid, flamprop, metazachlor, metolachlor, pendimethalin, pretilachlor, propachlor, propanil, trifluralin aminopyralid, chloramben, clopyralid, dicamba, picloram, pyrithiobac, quinclorac, quinmerac, cacodylic acid, copper arsenate, DSMA, MSMA, bensulide, bilanafos, ethephon, fosamine, glufosinate, glyphosate, piperophos, 2,4-D, 2,4-DB, dichlorprop, fenoprop, MCPA, MCPB, 2,4,5-T, dithiopyr, fluroxypyr, imazapyr, thiazopyr, triclopyr, diquat, MPP, paraquat, ametryn, atrazine, cyanazine, hexazinone, prometon, prometryn, propazine, simazine, simetryn, terbuthylazine, terbutryn, chlortoluron, DCMU, metsulfuron-methyl, monolinuron, tebuthiuron, 3-AT, aminocyclopyrachlor, bromoxynil, clomazone, DCBN, dinoseb, mesotrione, methazole, metham sodium, and sulfentrazone.

Yet another group of preferred herbicides to be used in accordance with this invention include, but are not limited to, ACCase inhibitors such as quizalofop, diclofop, fluazifop, fenoxaprop, clethodim, sethoxydim, and pinoxaden; ALS inhibitors such as imazamox, imazapic, imazethapyr, imazaquin, nicosulfuron, metsulfuron, triasulfuron, iodosulfuron, primisulfuron, chloriumuron, tribenuron, chlorsulfuron, thifensulfuron, sulfosulfuron, foramsulfuron, mesosulfuron, prosulfuron, halosulfuron, rimsulfuron, cloransulam-methyl, pyroxsulam, flumetsulam, diclosulam, pyrithiobac, flucarbazone, and propoxycarbazone; root growth inhibitors such as trifluralin, pendimethalin, and ethafluralin; growth regulators such as 2,4-D, 2,4-DB, MCPA, dicamba, clopyralid, fluroxypyr, picloram, and quinclorac; photosynthesis inhibitors (photosystem II) such as atrazine, simazine, prometryn, metribuzin, hexazinone, terbacil, bromoxynil, bentazon, linuron, and diuron; shoot growth inhibitors such as EPTC, metolachlor, alachlor, acetochlor, dimethenamid-P, and flufenacet; aromatic amino acid synthesis inhibitors such as glyphosate; glutamine synthesis inhibitors such as glufosinate; pigment synthesis inhibitors such as norflurazon, clomazone, mesotrione, tembotrione, topramezone, and isoxaflutole; PPO inhibitors such as acifluorfen, fomesafen, lactofen, oxyfluorfen, flumioxazin, flumiclorac, fluthiacet, carfentrazone, and sulfentrazone; photosynthesis inhibitors (photosystem I) such as paraquat and diquat.

Another aspect of the invention is an agrochemical composition comprising a compound of Formula (I) or (II) or a salt thereof as defined hereinabove.

A further aspect of the invention is a plant safener composition comprising the compound of the invention.

The composition preferably comprises a compound of formula I at a concentration of 1 $\mu$M to 100 mM, preferably from 10 $\mu$M to 10 mM, more preferably from 100 $\mu$M to 1 mM, e.g. 500 $\mu$M to 1 mM. The amount of the compound to be applied per plant typically ranges from 1 $\mu$mol to 100 mmol, preferably from 10 $\mu$mol to 10 mmol, most preferably from 50 $\mu$mol to 1 mmol.

The agrochemical composition or the plant safener composition of the invention may further comprise a herbicide. The safener compound of the present invention may be combined with one or more of the herbicides listed above.

The safener compounds described herein, together with agrochemical active compounds, preferably herbicides, are suitable for the selective control of weeds in a number of plant crops, for example in crops of economic importance, such as cereals (wheat, barley, rye, triticale, rice, corn, millet), sugar beet, sugar cane, oilseed rape, cotton and soybeans. Of particular interest is the use in monocotyledonous crops, such as cereals (wheat, barley, rye, triticale, sorghum), including corn and rice, and monocotyledonous vegetable crops, but also in dicotyledonous crops, such as, for example, soybean, oilseed rape, cotton, grape vines, vegetable plants, fruit plants and ornamental plants. The present invention can further be used on the following plants as non-limiting examples: tomatoes, squash, pumpkin, beans, broccoli, green beans, asparagus, peas, corn, carrots, spinach, cauliflower, lima beans, broad beans, firench beans, runner beans, navy beans, kidney beans, lentils, cabbage, onions, courgettes, aubergines, sweet basil, leeks, artichokes, lettuce, cassava leaves, tomatoes, cucumbers and gherkins, marrows, gourds, squashes, chilies and peppers, green onions, dry onions, red onions, shallots, garlic, chives, other alliaceous vegetables, okra, mushrooms, watermelons, cantaloupe melons, other melons, bamboo shoots, beets, chards, capers, cardoons, celery, chervil, cress, fennel, horseradish, marjoram, oyster plant, parsley, parsnips, potato, radish, rhubarb, rutabaga, savory, scorzonera, sorrel, sprouts, swede,

turnip, watercress and other vegetables, Maize, wheat, rye, oat, triticale, rice, barley, sorghum, millet, buckwheat, fonio, quinoa, spelt, other cereal crops, soybean, peanut, cotton, oilseed rape, sugar cane, bamboo, sesame, jute, canola, coconut, manihot, sunflower, tobacco, ground nuts, peanuts, oil palm, hemp, flax, lucerne, alfalfa tea, perennial grass. Particularly, but not exclusively, when the present invention is used in combination with a herbicide crops of useful plants in which the composition according to the invention can be used include cereals, for example barley and wheat, cotton, oilseed rape, maize, rice, soy beans, sugar beet and sugar cane, especially cereals and maize. Crops can also include trees, such as palm trees, coconut trees or other nuts, and vines such as grapes.

The grasses and weeds to be controlled may be both monocotyledonous species, for example Agrostis, Alopecurus, Avena, Bromus, Cyperus, Digitaria, Echinochloa, Lolium, Monochoria, Rottboellia, Sagittaria, Scirpus, Setaria, Sida and Sorghum, and dicotyledonous species, for example Abutilon, Amaranthus, Chenopodium, Chrysanthemum, Galium, Ipomoea, Nasturtium, Sinapis, Solanum, Stellaria, Veronica, Viola and Xanthium.

The compounds of the formula (I) (or (II) or salts thereof and their combinations with one or more of the abovementioned pesticides can be formulated in various ways, depending on the prevailing physicochemical and biological parameters. Examples of suitable formulation types are known to the person skilled in the art and described, for example, in: K. Martens, "Spray Drying Handbook", 3rd Ed., G. Goodwin Ltd., London, 1979; W. van Valkenburg, "Pesticide Formulations", Marcel Dekker, N.Y. 1973; Winnacker-Küchler, "Chemische Technologie" [Chemical Technology], volume 7, C. Hanser Verlag Munich, 4th edition 1986; "Perry's Chemical Engineer's Handbook", 5th Ed., McGraw-Hill, N.Y. 1973, pages 8-57. The formulation auxiliaries required, such as inert materials, surfactants, solvents and other additives are also known and are described, for example, in: McCutcheon's "Detergents and Emulsifiers Annual", MC Publ. Corp., Ridgewood N.J.; C. Marsden, "Solvents Guide", 2nd Ed., Interscience, N.Y. 1963; H. von Olphen, "Introduction to Clay Colloid Chemistry", 2nd Ed., J. Wiley & Sons, N.Y.; Schönfeldt, "Grenzflächenaktive Äthylenoxidaddukte" [Surface-active ethylene oxide adducts], Wiss. Verlagsgesellschaft, Stuttgart 1976; Sisley and Wood, "Encyclopedia of Surface Active Agents", Chem. Publ. Co. Inc., N.Y. 1964; Watkins, "Handbook of Insecticide Dust Diluents and Carriers", 2nd Ed., Darland Books, Caldwell N.J.; Winnacker-Küchler, "Chemische Technologie", volume 7, C. Hanser Verlag Munich, 4th edition 1986. In addition to the abovementioned formulation auxiliaries, the useful-plant-protecting compositions may comprise, if appropriate, customary tackifiers, wetting agents, dispersants, penetrants, emulsifiers, preservatives, antifreeze agents, fillers, carriers, colorants, anti-foams, evaporation inhibitors and pH or viscosity regulators.

Depending on the formulation type, the useful-plant-protecting compositions generally comprise 0.1 to 99% by weight, in particular 0.2 to 95% by weight, of one or more safeners of the formula (I) or (II), or a combination of safener and pesticide. Furthermore, they comprise 1 to 99.9, in particular 4 to 99.5, % by weight of one or more solid or liquid additives and 0 to 25, in particular 0.1 to 25, % by weight of a surfactant. In emulsifiable concentrates, the concentration of active compound, i.e. the concentration of safener and/or pesticide, is generally 1 to 90, in particular 5 to 80, % by weight. Dusts usually comprise 1 to 30, preferably 5 to 20, % by weight of active compound. In wettable powders, the concentration of active compound is generally 10 to 90% by weight. In water-dispersible granules, the content of active compound is, for example, between 1 and 95% by weight, preferably between 10 and 80% by weight.

For use, the formulations may, if appropriate, be diluted in a customary manner, for example in the case of wettable powders, emulsifiable concentrates, dispersions and water-dispersible granules, with water. Preparations in the form of dusts, granules and sprayable solutions are usually not diluted with any further inert substances prior to use. The required application rate of the safeners varies with the external conditions such as, inter alia, temperature, humidity and the type of herbicide used.

The present invention further provides a method of identifying a receptor molecule binding to a compound of Formula (I) or (II) as defined herein, comprising (i) attaching the compound of Formula (I) or (II) or a salt thereof to a solid support to obtain a modified solid support, (ii) contacting the modified solid support with homogenized plant material, (iii) identifying and optionally characterizing plant molecules bound to the modified solid support. Methods of attaching chemical compounds to suitable solid supports, as well as methods of homogenizing plant material are known to the person skilled in the art. Step (iii) of the method typically comprises washing the solid support (e.g. the column material) to remove unbound plant material not bound to the solid support, and eluting the bound plant material. the eluted compound can be detected by HPLC or other means of detection. The structure of the compounds may then be determined by methods known per se, e.g. by mass spectroscopy, or gas chromatography.

The present invention further provides a method of screening for plant growth-promoting compounds and/or plant safeners, comprising providing a derivative of a compound of Formula (I) or (II) as defined herein, and determining the plant growth promoting activity and/or the stress tolerance conferring activity of the derivative.

The examples below illustrate the invention and are not to be understood to limit it.

## Examples

### Example 1: Plants growing in agar plates

Surface sterilized seeds of *Arabidopsis thaliana* and *Lycopersicum esculentum* and were sown on Agar plates1 supplemented with 200 μM pABA. Six days after germination, plants bear longer root hairs, after 10 days, they exhibited more adventitious roots and more lateral roots than untreated plants (Fig. 1). They were 3 replicates for each experiment.

### Example 2. Plants growing in soil and watered or sprayed with a solution of pABA

The ability of pABA to promote plant growth when given as a foliar treatment *(Arabidopsis thaliana*) or incorporated in soil was demonstrated *(Arabidopsis thaliana* and *Zea mays).*

*Arabidopsis thaliana*

Arabidopsis plants were grown from seeds in pots in a mixture of soil and vermiculite and watered with tap water for 15 days. Then watering was stopped for 48h until soil looked dried at the surface of the pot. A total of 4 trails containing 51 pots each were divided into 2 parts. Two trails were watered with deionized water[2] or deionized water supplemented with 1 mM pABA. The other trails were sprayed with solutions described above. Results show that watering plants with 1 mM pABA induced fresh weight of Arabidopsis aerial parts (leaves ad inflorescence stems) on average of 3.84%%. But when plant were given a foliar application, we observed 17.54% greater fresh weight than plant sprayed with only water[3] (Table 1, Fig. 2).

[3]deionized water + 1g $L^{-1}$ MES sodium salt, pH 6.9

**Table 1.** Plants growing in soil and watered or sprayed with a solution containing pABA

| | Control (n=51) | pABA (n=51) |
|---|---|---|
| Sprayed | 0,52 ± 0,02 | 0,62 ± 0,02* |
| Watered | 1,00 ± 0,03 | 1,08 ± 0,03 |
| Asterisk (*) indicates significant difference t>95%. | | |

*Zea mays*

Maize seeds were germinated in Petri® dishes containing deionized-water-humidified Whatman® paper. Germinations of equal size were transferred in pots (one per pot) containing a mixture of soil and vermiculite and watered with tap water for 30 days. Then watering was stopped for 48h until soil looked dried at the surface of the pot. A total of 2 trails containing 10 pots each were respectively were watered with deionized water[2] or deionized water supplemented with 1 mM pABA.

[2]deionized water + 1mM pABA + 1g $L^{-1}$ MES sodium salt, pH 6.9

Results show that watering plants with 1 mM pABA significantly induced fresh weight of maize shoot (Fig. 3, Table 2).

**Table 2.** Plants growing in soil and watered with a solution containing pABA

| | Control (n=10) | pABA (n=10) |
|---|---|---|
| Number of leaves | 6.25±0.13 | 6.58 ±0.14 |
| Root weight (g) | 6.39±0.63 | 7.85±0.49 |
| Shoot weight (g) | 4.70±040 | 6.18*±0.35 |
| Asterisk (*) indicates significant difference t>95%. | | |

### Example 3. Induction of adventitious roots on poplar explants

Since pABA can stimulate adventitious development in Arabidopsis, we tested whether pABA could also promotes adventitious development on poplar, a commercially important tree. Poplar explants were grown at the surface of Agar plates[1], with poplar stems being covered with an Agar plug[1] containing 200 μM pABA, or in tubes containing solid medium[4] supplemented with 200 μM pABA prior Agar polymerization. In both plates and tubes, pABA promoted root biomass by inducing an important root system (129% more adventitious than control) (Table 3).

[1]Arabidopsis growth medium (1/2 MS medium (Murashige and Skoog, 1962).
[4]Plants were micro propagated *in vitro* and grown on 1/2 MS medium (Murashige and Skoog, 1962) in glass culture tubes under a 16 h photoperiod at 24°C in a growth chamber.

**Table 3.** Activity of pABA of poplar explant.

| | Control (n=16) | pABA (n=20) |
|---|---|---|
| Number of leaves | 8.68±0.80 | 8.09±0.59 |
| Adventitious root number | 1.31±0.11 | 6.15*(129%)±0.47 |
| Entire plant fresh weight(mg) | 203.43±22.40 | 216±23.69 |
| Roots fresh weight (mg) | 42.93±3 | 68.68* (46%)±6.73 |
| Asterisk (*) indicates significant difference t>95%. | | |

**References**

Hossain T et al. 2004 Proc. Natl. Acad. Sci. 101: 5158.
Sahr et al. 2006 Biochem. J. 396: 157-162.

**Example 4**

**Material and methods**

**Plant material**

adcs T-DNA mutants *(SALK_095283* and *SALK_034215)* were in *Arabidopsis thaliana* (L.) Heynh., ecotype Columbia (Col-0) background and *ugt75b* (AY027263) in Landsberg *erecta* (Ler).

**Plant media and treatments**

Seeds were surface-sterilized and sown on solid *Arabidopsis* medium (AM) (2.3 g/liter MS salts, 1% sucrose, 5mM MES, 1.3% agar-agar (pH 6.0). After vernalization for 2 days at 4 °C, seeds were germinated under long-day period (16 h light, 8 h darkness) at 22 °C. pABA, and 5-FTHF (Folinic acid calcium salt) were dissolved in water used as indicated in result section. B-estradiol was dissolved in 100% ETOH and added to AM without exceeding an ETOH concentration of 0,1%. Image-capture of plants and growth measurement were performed on 6-day old seedlings, otherwise stated.

**Construction of plasmids**

Plasmids and the conducted modifications are listed in Table S1. Plasmids were constructed according to [36], Gateway® cloning procedures (Invitrogen), *E. coli* TOPO10 cells (Invitrogen) was used as a host for constructed plasmids. All genomic sequences were amplified from WT Col-0, *GAT-ADCScDNA* was obtained from RIKEN. *GAT-ADCS* and *HPPK-DHPS* related inserts were cloned into the pDONR207 vector while *UGT75B* related fragments were cloned into pENTR vector. All entry clones were verified through sequencing. Vectors developed by Curtis et al.[26] were used as expression vectors. We developed a novel inducible RNAi vector based on the pMDC7 vector. The gateway cassette in pMDC7 was replaced by the RNAi gateway cassette of pJawohl8 using the restriction sites *SpeI* and *XhoI*[37]. All expression clones were generated using the LR-cloning technique (Invitrogen), except pUGT75B::NLS3xYFP [38] which was cloned into the pMDC32 by *HindIII* and *SacI* after replacing the 35Spromoter and the gateway cassette.

**Plant transformation**

The agrobacterium strain GV3101(pMP90) was used to transform Arabidopsis according to the standard floral dip method [39]. Transformants were selected on 15μg/ml Hyromycin B.

**Quantification of free pABA**

Free and total pABA determinations were essentially performed according to [40]. Briefly, seedlings (0.2g to

0.5g) were grinded in liquid nitrogen and extracted two times by 2 ml of methanol. In separate control experiments we verified that the amount of pABA removed by the second extraction represented less than 20% of the pABA removed by the first one, indicating that the yield of extraction was over80%. Both extracts were combined then centrifuged and the supernatant was dried under a nitrogen gas flow. A 1-ml aliquot of water was added to the residue, followed by sonication for 5 min. The sample solution was then divided into two equal parts of 0.45 ml each, one for the free and the other for the total pABA analyses. For the total pABA analysis, 50 μl of 1 M HCl was added and the tube was incubated at 80°C for 2 hours. After cooling down, 50 μl of 1 M NaOH was added for neutralization. Finally, the sample solutions were ultrafiltrated by centrifugation before analysis by reverse phase LC-MS (column: Macherey-Nagel Nucleoshell® RP 18 100x3 mm; HPLC: Agilent Technologies 1100 series; mass spectrometer: LTQ from ThermoFisher Scientific). pABA was identified from its retention time and by the MS2 signal corresponding to decarboxylated pABA (precursor ion m/z = 138; product ion m/z = 94). pABA was quantified from standard calibration curves obtained in similar conditions with commercial pABA.

**Complementation of *adcs2***

Self-pollinated heterozygous *adcs2* were transformed with the genomic fragment of *GAT-ADCS* (-2175bp to 4364bp). Transformants were confirmed as *adcs2* mutants by PCR and the ratio of defective embryos was determined. Complemented single insertion lines were expected to display a ratio of 6.25% defective embryos, while for double insertion lines a ratio of 1.56% was expected.

**Plant scanning and microscopy**

Seedlings were imaged while growing in plate with a flatbed CanonScan 9950F scanner. Histological detection of β-glucuronidase (GUS) activity and plant preparation for microcopy were performed according to [41]. For light microscopy samples were observed with a Zeiss Axiovert 200M MOT (Carl Zeiss MicroImaging) for high magnification pictures. Low magnification views were taken with a Zeiss Stemi SV11 Apo stereomicroscope (Carl Zeiss MicroImaging), viewed under differential interference contrast (DIC) optics. Fluorescent proteins were analyzed with a Zeiss LSM 5 DUO scanning microscope and AZ-C1 Macro Laser Confocal Microscope from Nikon. To monitor GFP and DAPI fluorescence, we used multitracking in frame mode. GFP was excited using the 488 nm laser line in conjunction with a 505-530 band-pass filter. DAPI was excited with the 405 nm laser line and collected using a 420-480 nm band-pass filter. For VENUS imaging, proteins were excited using the 514 nm laser line, and the emission collected at 527 nm. Images were analyzed with the LSM image browser (Carl Zeiss MicroImaging) and BitplaneImaris®.

**Results**

**Tissue localization of pABA and folate syntheses in** *Arabidopsis* ***thaliana***

First we visualized the sites of pABA and folate synthesis in *planta.* We constructed reporter lines to visualize the expression domains of *GAT-ADCS* and *HPPK-DHPS,* the genes required respectively for pABA synthesis[16] and pABA incorporation into the THF pathway [7](Figure 4A). For pABA synthesis, *GAT-ADCS* promoter was fused to the β-Glucoronidase (GUS) reporter gene [17]. *GAT-ADCS* was expressed in pollen grains and during female gametophyte ontogenesis (Figure 5). During embryo development, *GAT-ADCS* was expressed predominantly in endosperm until the transition globular-heart stage. Thereafter, *GAT-ADCS* expression dropped in maternal tissues and was shifted to developing embryo (Figure 5). In seedlings, *GAT-ADCS* promoter was active throughout the plant (Figure 4C). In shoots, GUS signal was present in cotyledons and leaves mainly in vasculature and stomata and in shoot apical meristem. *GAT-ADCS* expression was detected at root-shoot junction and along root vasculature up to the elongation zone (Figures 4C and 12A). At root tip, for short time GUS-staining (30 min), *GAT-ADCS* was expressed in the QC and in columella lateral root cap cells (Figure 4D, left). When plants were stained for longer time (3h), pADCS::GUS signal could be detected in epidermis and cortex (Figure 4D, middle). HPPK-DHPS catalyzes the fusion of pABA and pterin for folate synthesis [7]. *HPPK-DHPS* promoter activity globally matched *GAT-ADCS* promoter expression pattern in the whole plant (Figure 4C and 4D) strongly suggesting that pABA is produced at the site of its utilization for THF synthesis.

**GAT-ADCS is the key enzyme for plant development and pABA synthesis in *Arabidopsis thaliana***

The expression pattern of *GAT-ADCS* during embryo development suggested that pABA might be involved in early steps of plant ontogenesis. To confirm the importance of pABA synthesis for plant development, we isolated two lines carrying T-DNA insertions in the *GAT-ADCS* gene in the Columbia (Col-0) background which we named *adcs-1* (SALK_034215) and *adcs-2* (SALK_095283). *adcs-1* has a T-DNA inserted 48bp upstream of the transcriptional starting

point (Figure 6A). Surprisingly homozygous *adcs1* showed no growth alterations suggesting that the remaining portion of the promoter was still active (Figure 7).However, *adcs-2* which has a T-DNA inserted in the $12^{th}$ exon produced 25% embryos arrested at the globular stage (Figures 6A-D). These embryos could develop further when opened siliques were transplanted on a medium supplemented with pABA, confirming these mutants lacked synthesis of pABA dependent metabolites (Figure 8A-C). In support of the latter conclusion, shoots not in contact with the medium did not develop further (Figure 8D).Moreover, *adcs-2* mutants could be complemented by *GAT-ADCSWT* allele, reducing the ratio of arrested embryos from 25% to 6.25%, the expected ratio for a complemented heterozygous mutant (Figure 6F and 6G, lines 10 and 17). Some complemented lines displayed an embryo defective ratio of 1.56%, indicative of a double insertion of the complementing construct (Figure 6F and 6G, line 11). The observation that roots of *adcs-2* could grow further on pABA supplemented medium suggests that pABA was indeed absorbed by the roots and metabolized. All together these results indicate the existence of an active pathway for pABA biosynthesis in roots.

To further connect pABA requirements and folate biosynthesis, we engineered a β-estradiol (EST) inducible RNAi targeting a fragment of *GAT-ADCS* encoding for a *GAT-ADCS* specific linker region [18].

When applied to roots, EST induced down regulation of *GAT-ADCS* expression which resulted in a root growth arrest, again supporting the importance of de *novo* pABA synthesis for root growth (Figure 9A and 9B). As expected, arrested roots could be rescued by adding either pABA or a folate derivative (5-formyl-tetrahydrofolate, 5-FTHF, a stable derivative that is readily converted to metabolically active folates once incorporated in cells)(Figure 9C). Taken together these results demonstrate unequivocally that GAT-ADCS-dependent de novo synthesis of pABA in root tips is required for folate synthesis and thereby for root growth.

**pABA displays an innate folate-independent activity on root growth**

To get more insights into the pABA role on plant development, plants were grown in presence of pABA. Concentrations of pABA greater than 50μM inhibited root growth and promoted lateral and adventitious roots development as well as root hair growth without affecting the aerial part of the plant (Figure 10A-E). In contrast, 5-FTHF applied at similar concentrations did not phenocopy the activity of pABA (Figure 10B). To verify if both compounds were taken up by roots, we incubated plants with pABA and 5-FTHF respectively in association with sulfanilamide (SULF), a pABA antagonist used as an inhibitor of folate synthesis [19]. In both cases SULF inhibition on plant development was reverted, confirming that pABA and 5-FTHF were indeed absorbed and metabolized (Figure 10F).

Moreover, besides its activity on root elongation, pABA, but not 5-FTHF, also suppressed plant-root waving (Figure 10B). Arabidopsis root waving occurs when plants are grown at the surface of an agar plate that is slightly tilted. This growth response is strongly dependent on positive gravitropism[20]. To test whether pABA modulates root response to gravity, agar plates bearing Arabidopsis seedlings were rotated with an angle of 135° and their graviresponse was quantified (Figure 10G). For AM and 5-FTHF treatments, three hours after gravistimulation, the majority of root tips displayed angles with the vertical axis comprised between 60 and 120° (with 0° representing full recovery). For pABA-treated seedlings, root tips showed enhanced curvature, with the majority of angles between 30° and 90°, indicating that roots responded faster to gravistimulation. Taken together these data show that pABA and 5-FTHF have different activities and therefore suggest that pABA possesses an innate folates-independent activity on plant growth.

**Regulation of pABA activity through conjugation of pABA to glucose**

pABA exists under two forms: an unconjugated metabolically active form presumably located in the cytoplasm (cytosol plus organelles), and an inactive conjugated form located in the vacuole (Figures 4A and 11A). In control plants, free pABA is very low representing 5% of total pABA, in average. This low concentration (probably less than 1 μM in the cytoplasm, assuming a cytoplasmic volume representing 10 % of the cell volume) makes accurate determination of free pABA quite difficult because, as previously shown [10], breakdown of the esterified form of folate during sample workup is very difficult to avoid and contributes, sometimes quite significantly, to the amount of free pABA.

In order to understand how pABA homeostasis is controlled, we examined the role of this conjugation process on root growth and development. In plants pABA is preferentially conjugated to glucose by the pABA-glucosyltransferaseUGT75B (AT1G05560) [11]. This enzyme is active throughout the plant including leaves, flowers, siliques, and root [11]. To know precisely in which tissues pABA is conjugated to glucose, we investigated the expression pattern of the glucosyltransferase encoding *UGT75B* gene. The promoter of *UGT75B* was fused to a nuclear targeted YFP (NLS3xYFP) [21]. The expression pattern in the root tip was similar to those of *GAT-ADCS* and *HPPK-DHPS.* Like *GAT-ADCS, UGT75B* was expressed in lateral root cap cells (LRC), in epidermis and cortex (Figure 12).

To determine how the regulation of pABA pools may influence pABA activity on root development, we analyzed a *ugt75b* knock-out mutant and then generated stable conditional lines differentially overexpressing *UGT75B.* As previously shown [9], knocking out expression of the *UGT75B* gene resulted in a 3-4 fold decreased of the pABA-glucose level and a 5 time increase of the free form (Figure 11B). The roots of the *ugt75b* mutant displayed higher sensitivity to

pABA than wild type (Figure 13). At low concentration of pABA (10μM), 60% percent of *ugt75B* seedlings showed emerged adventitious roots (AR) versus only 20% for wild-type (WT) plants (Figure 13A). Similarly, root growth of *ugt75b* appeared more sensitive to pABA and was already significantly inhibited at 30 μM (Figure 13B).

Conditional induction of *UGT75B* (Lex::UGT75B) with 1 μM β-estradiol (EST) resulted in a two fold increase of pABA-glucose compared with WT (Figure 11 D). Note that the non-induced *UGT75B* (Figure 11 C) also displayed an increased level of pABA- glucose (about 1.5 fold the WT) indicating some overexpression of UGT75B even in the absence of EST. Due to the low initial level of free pABA, it was not possible in these experiments to determine any significant change within the free pABA pool. However, taking into account that the increase of pABA-glucose resulting from the overexpression of UGT75B required the contribution of the free pool, this pool might be less available for other metabolic purposes. From this point of view, conditional induction of *UGT75B* with high concentration of EST (20μM), abolished root growth and induced exaggerated root waving (Figures 13D and 14). Upon weak β-estradiol induction (0.1μM), root growth was retarded and roots displayed a right-hand slanting (Figure 13E). These two phenotypes could be suppressed by exogenous pABA when only applied at high concentration (from 200μM). In addition, rescued plants became slightly resistant to pABA and developed longer roots than pABA-treated wild type (Figure 13E and G). Furthermore, since the glucosylation of pABA could have dampened the biosynthesis of folates, we checked whether 5-FTHF could suppress observed growth defects. 5-FTHF supplementation had no effect on β-estradiol-induced *UGT75B* plants (Figure 13E-G), indicating that growth alterations were not due to folate deficiency. Upon strong *UGT75B* induction, root growth was only partially recovered in the presence of pABA and very poorly in the presence of 5-FTHF (Figure 14A and 14B).

**pABA impacts on processes responsible for auxin distribution in root epidermis**

Plant growth relies on auxin gradients maintained by series of auxin influx carriers of the AUXIN RESISTANT 1/ Like AUX1 (AUX/LAX) family [22], efflux facilitators such as ABCB/multi-drug resistance/P-glycoprotein (ABCB/MDR/PGP) [23], and PIN-FORMED (PIN) proteins [24]. PIN-proteins subcellular localization is highly dynamic and influenced by various internal and external signals, thereby directing and redirecting the intercellular fluxes of auxin[25]. Hence, the polarity of PIN-proteins is for example used to indicate the direction of auxin flux [26]. During plant response to gravity, auxin transport through AtPIN2 plays a crucial role and *pin2* mutants are unable to establish lateral auxin gradient after gravistimulation and therefore are agravitropic [27,28]. Plants treated with pABA were hypergravitropic (Figure 10D and 10G), while induced Lex::UGT75B plants showed disturbed root graviresponse (Figures 13D and 15A) suggesting that pABA could play a role in modulating the activity of some components of the auxin signaling pathway important for root graviresponse. To test this hypothesis we visualized both PIN1 and PIN2 localization and auxin gradient in roots tips of plants treated with exogenous pABA or deprived of free endogenous pABA by overexpressing UGT75B. In WT and Lex::UGT75B (non induced) root tips treated or not with pABA, PIN1 and PIN2 displayed their typical localization pattern. In the stele up to cortex cells, PIN1 was basally (rootward) localized. PIN2 was localized apically (shootward) in epidermis channeling auxin basipetally, and rootward in cortex cells (from root-transition zone) transporting auxin back to the QC (Figure 15B). Epidermis-shootward and cortex-rootward PIN2 auxin transport reflux loop consolidate root-tip auxin maxima (as measured by the auxin-sensitive *DR5* promoter), which is important for cell division and growth (Figures 15B and 16A) [29]. However, while estradiol-treated Lex::UGT75B roots displayed no change for PIN1 subcellular localization, PIN2 polarity was lost in both epidermis and cortex cells. PIN2 was found at plasma membrane around the cell and in the cytoplasm of 80% (n=10) of plants analyzed (Figure 15B). As a consequence, DR5::GUS signal also was perturbed in 100% (n=10) of plants analyzed (Figure 16D). Again, PIN2 polarity and root response to gravity of induced Lex::UGTB75B could be restored by pABA (250μM), but not by 5-FTHF at similar or even higher concentrations (up to 1mM) (Figure 15A and 15B).

**Example 5: Effects of Benzoic acid and its derivatives on root hairs**

It was tested whether benzoic acid derivatives can counteract the activity of natural auxins (IAA) (Figure 17 and Figure 18). The experiments were carried out as described for Figure 10. Briefly, Arabidopsis seedlings (Wild type Col 0) were cultivated on (a) control medium (AM) and AM supplemented with (b) 100μM pABA, (c) 1 μM IAA or (d) 1 μM IAA + 100μM pABA (Figure 17, upper panel). As can be seen from Figure 17, pABA could antagonize the growth-inhibitory effects of IAA.

In a similar experiment, Arabidopsis seedlings (Wild type Col 0) were cultivated on control medium (AM), AM supplemented respectively with 3-ABA, pABA, Procaine, 5-FTHF, applied at the same concentration (100 μM), in the absence (Figure 18, white bars) or presence (Figure 18, black bars) of 2 μM IAA. Benzoic acid derivatives such as pABA, mABA, Procaine and 5-FTHF fully restored root growth in the presence of inhibory concentrations of IAA.

Further, the activity of benzoic acid derivatives on root growth was studied using Arabidopsis seedlings cultivated on Control (AM) medium (Mock) or AM supplemented with either 100 μM pABA, $NO_2$-BA, Cl-BA, I-BA or F-BA. It was found that benzoic acid derivatives having a $pK_a$ value of less than 4 had little or no root growth-promoting effect. On

the other hand, pABA which has a $pK_a$ value of about 4.9 had significant root growth-promoting activity (Figure 19).

**References**

1. Ravanel S, Douce R, Rébeillé F (2011) Metabolism of folates in plants. In: Rébeillé F, Douce R, editors. Advances in Botanical Research, Vol 59. Amsterdam, The Netherlands: Elsevier. pp. 67-106.
2. Hanson AD, Gregory JF (2011) Folate Biosynthesis, Turnover, and Transport in Plants. In: Merchant SS, Briggs WR, Ort D, editors. Annual Review of Plant Biology, Vol 62. Palo Alto: Annual Reviews. pp. 105-125.
3. Mehrshahi P, Gonzalez-Jorge S, Akhtar TA, Ward JL, Santoyo-Castelazo A, et al. (2010) Functional analysis of folate polyglutamylation and its essential role in plant metabolism and development. Plant Journal 64: 267-279.
4. Basset G, Quinlivan EP, Ziemak MJ, Díaz de la Garza R, Fischer M, et al. (2002) Folate synthesis in plants: The first step of the pterin branch is mediated by a unique bimodular GTP cyclohydrolase I. Proceedings of the National Academy of Sciences 99: 12489-12494.
5. Camara D, Richefeu-Contesto C, Gambonnet B, Dumas R, Rébeillé F (2011) The synthesis of pABA: Coupling between the glutamine amidotransferase and aminodeoxychorismate synthase domains of the bifunctional aminodeoxychorismate synthase from Arabidopsis thaliana. Arch Biochem Biophys 505: 83-90.
6. Basset GJC, Ravanel S, Quinlivan EP, White R, Giovannoni JJ, et al. (2004) Folate synthesis in plants: the last step of the p-aminobenzoate branch is catalyzed by a plastidial aminodeoxychorismate lyase. Plant Journal 40: 453-461.
7. Rebeille F, Macherel D, Mouillon J-M, Garin J, Douce R (1997) Folate biosynthesis in higher plants: purification and molecular cloning of a bifunctional 6-hydroxymethyl-7,8-dihydropterin pyrophosphokinase/7,8-dihydropteroate synthase localized in mitochondria. EMBO J 16: 947-957.
8. Ishikawa T, Machida C, Yoshioka Y, Kitano H, Machida Y (2003) The GLOBULAR ARREST1 gene, which is involved in the biosynthesis of folates, is essential for embryogenesis in Arabidopsis thaliana. Plant Journal 33: 235-244.
9. Neuburger M, Rebeille F, Jourdain A, Nakamura S, Douce R (1996) Mitochondria are a major site for folate and thymidylate synthesis in plants. Journal of Biological Chemistry 271: 9466-9472.
10. Quinlivan EP, Roje S, Basset G, Shachar-Hill Y, Gregory JF, et al. (2003) The folate precursor p-aminobenzoate is reversibly converted to its glucose ester in the plant cytosol. Journal of Biological Chemistry 278: 20731-20737.
11. Eudes A, Bozzo GG, Waller JC, Naponelli V, Lim EK, et al. (2008) Metabolism of the folate precursor p-aminobenzoate in plants - Glucose ester formation and vacuolar storage. Journal of Biological Chemistry 283: 15451-15459.
12. Ludwig-Müller J (2011) Auxin conjugates: their role for plant development and in the evolution of land plants. Journal of Experimental Botany 62: 1757-1773.
13. Sahr T, Ravanel S, Rebeille F (2005) Tetrahydrofolate biosynthesis and distribution in higher plants. Biochemical Society Transactions 33: 758-762.
14. Jabrin S, Ravanel S, Gambonnet B, Douce R, Rebeille F (2003) One-carbon metabolism in plants. Regulation of tetrahydrofolate synthesis during germination and seedling development. Plant Physiology 131: 1431-1439.
15. Nawy T, Lee JY, Colinas J, Wang JY, Thongrod SC, et al. (2005) Transcriptional profile of the Arabidopsis root quiescent center. Plant Cell 17: 1908-1925.
16. Basset GJC, Quinlivan EP, Ravanel S, Rebeille F, Nichols BP, et al. (2004) Folate synthesis in plants: The p-aminobenzoate branch is initiated by a bifunctional PABA-PabB protein that is targeted to plastids. Proceedings of the National Academy of Sciences of the United States of America 101: 1496-1501.
17. Jefferson RA, Kavanagh TA, Bevan MW (1987) GUS fusions: beta-glucuronidase as a sensitive and versatile gene fusion marker in higher plants. EMBO J 6: 3901-3907.
18. Hilson P, Allemeersch J, Altmann T, Aubourg S, Avon A, et al. (2004) Versatile gene-specific sequence tags for Arabidopsis functional genomics: transcript profiling and reverse genetics applications. Genome Res 14: 2176-2189.
19. Sankar DVS (1958) Para-Amino-Benzoic Acid and Sulphanilamide in the Nutrition of Neurospora-Crassa. Nature 181: 629-630.
20. Okada K, Shimura Y (1990) Reversible Root-Tip Rotation in Arabidopsis Seedlings Induced by Obstacle-Touching Stimulus. Science 250: 274-276.
21. Sarkar AK, Luijten M, Miyashima S, Lenhard M, Hashimoto T, et al. (2007) Conserved factors regulate signalling in Arabidopsis thaliana shoot and root stem cell organizers. Nature 446: 811-814.
22. Ugartechea-Chirino Y, Swarup R, Swarup K, Peret B, Whitworth M, et al. (2010) The AUX1 LAX family of auxin influx carriers is required for the establishment of embryonic root cell organization in Arabidopsis thaliana. Annals of Botany (London) 105: 277-289.

23. Geisler M, Murphy AS (2006) The ABC of auxin transport: the role of p-glycoproteins in plant development. FEBS Lett 580: 1094-1102.

24. Paponov IA, Teale WD, Trebar M, Blilou I, Palme K (2005) The PIN auxin efflux facilitators: evolutionary and functional perspectives. Trends Plant Sci 10: 170-177.

25. Grunewald W, Friml J (2010) The march of the PINs: developmental plasticity by dynamic polar targeting in plant cells. EMBO J 29: 2700-2714.

26. Wisniewska J, Xu J, Seifertova D, Brewer PB, Ruzicka K, et al. (2006) Polar PIN localization directs auxin flow in plants. Science 312: 883.

27. Muller A, Guan C, Galweiler L, Tanzler P, Huijser P, et al. (1998) AtPIN2 defines a locus of Arabidopsis for root gravitropism control. EMBO J 17: 6903-6911.

28. Ottenschläger I, Wolff P, Wolverton C, Bhalerao RP, Sandberg G, et al. (2003) Gravity-regulated differential auxin transport from columella to lateral root cap cells. Proc Natl Acad Sci U S A 100: 2987-2991.

29. Blilou I, Xu J, Wildwater M, Willemsen V, Paponov I, et al. (2005) The PIN auxin efflux facilitator network controls growth and patterning in Arabidopsis roots. Nature (London) 433: 39-44.

30. Hanson AD, Gregory JF, 3rd (2011) Folate biosynthesis, turnover, and transport in plants. Annu Rev Plant Biol 62: 105-125.

31. Meinke DW, Meinke LK, Showalter TC, Schissel AM, Mueller LA, et al. (2003) A sequence-based map of Arabidopsis genes with mutant phenotypes. Plant Physiology 131: 409-418.

32. Patton DA, Schetter AL, Franzmann LH, Nelson K, Ward ER, et al. (1998) An embryo-defective mutant of arabidopsis disrupted in the final step of biotin synthesis. Plant Physiol 116: 935-946.

33. Srivastava AC, Ramos-Parra PA, Bedair M, Robledo-Hernandez AL, Tang Y, et al. (2011) The folylpolyglutamate synthetase plastidial isoform is required for postembryonic root development in Arabidopsis. Plant Physiol 155: 1237-1251.

34. Kutschera U, Bergfeld R, Schopfer P (1987) Cooperation of Epidermis and Inner Tissues in Auxin-Mediated Growth of Maize Coleoptiles. Planta 170: 168-180.

35. Dhonukshe P, Huang F, Galvan-Ampudia CS, Mähönen AP, Kleine-Vehn J, et al. (2010) Plasma membrane-bound AGC3 kinases phosphorylate PIN auxin carriers at TPRXS(N/S) motifs to direct apical PIN recycling. Development 137: 3245-3255.

36. Sambrook JF, E.F., Maniatis, T., editor (1989) Molecular cloning: a Laboratory Manual. New York.

37. Feys BJ, Wiermer M, Bhat RA, Moisan LJ, Medina-Escobar N, et al. (2005) Arabidopsis SENESCENCE-ASSOCIATED GENE101 stabilizes and signals within an ENHANCED DISEASE SUSCEPTIBILITY1 complex in plant innate immunity. Plant Cell 17: 2601-2613.

38. Breuninger H, Rikirsch E, Hermann M, Ueda M, Laux T (2008) Differential expression of WOX genes mediates apical-basal axis formation in the Arabidopsis embryo. Dev Cell 14: 867-876.

39. Clough SJ, Bent AF (1998) Floral dip: a simplified method for Agrobacterium-mediated transformation of Arabidopsis thaliana. Plant J 16: 735-743.

40. Camara D, Bisanz C, Barette C, Van Daele J, Human E, et al. (2012) Inhibition of p-Aminobenzoate and Folate Syntheses in Plants and Apicomplexan Parasites by Natural Product Rubreserine. Journal of Biological Chemistry 287: 22367-22376.

41. Ditengou FA, Teale WD, Kochersperger P, Flittner KA, Kneuper I, et al. (2008) Mechanical induction of lateral root initiation in Arabidopsis thaliana. Proc Natl Acad Sci U S A 105: 18818-18823.

## Claims

1. A method of promoting the growth of a plant and/or improving the stress tolerance of a plant, comprising applying to the plant a compound of Formula (I)

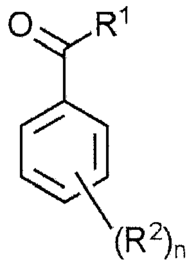

(I)

or a salt thereof,
wherein

n is 0, 1, 2, 3, 4 or 5,
$R^1$ is $-OR^3$, $-NR^4R^5$, halogen, or a hydrocarbon chain with 1 to 6 carbon atoms,
each $R^2$ is independently selected from the group consisting of amino, nitro, cyano, halogen, $(C_1$-$C_6)$-alkyl, $(C_2$-$C_6)$-alkenyl, $(C_2$-$C_6)$-alkinyl, $(C_1$-$C_6)$-alkylamino, $(C_2$-$C_6)$-alkenylamino, $(C_2$-$C_6)$-alkinylamino, $(C_1$-$C_6)$-alkoxy, sulfonylamino, $(C_1$-$C_6)$-alkylsulfonylamino, amino-$(C_1$-$C_6)$-alkyl, amino-$(C_2$-$C_6)$-alkenyl, amino-$(C_2$-$C_6)$-alkinyl, hydroxycarbonyl, aminocarbonyl,
$R^3$ is hydrogen or optionally substituted $(C_1$-$C_6)$-alkyl,
each of $R^4$ and $R^5$ is independently selected from the group consisting of hydrogen and optionally substituted $(C_1$-$C_6)$-alkyl;
**characterized in that** $pK_a$ value of the compound is at least 4.0.

**2.** The method of claim 1, wherein the stress tolerance is tolerance to one or more herbicides.

**3.** The method of claim 1 or 2, wherein the plant has been treated, is treated or is to be treated with a herbicide.

**4.** The method of any one of the preceding claims, wherein $R^1$ is -OH or $-NH_2$.

**5.** The method of any one of the preceding claims, wherein n is 0 or 1.

**6.** The method of any one of the preceding claims, wherein the $pK_a$ value of the compound is at least 4.2, preferably at least 4.6, most preferably at least 4.8.

**7.** The method of any one of claims 1 to 5, wherein each $R^2$ is independently selected from the group consisting of amino, cyano, and methyl.

**8.** The method of claim 7, wherein each $R^2$ is amino.

**9.** The method of any one of claims 1 to 5, 7 and 8, wherein one group $R^2$ is attached to the carbon atom at position 3 or 4 of the aromatic ring.

**10.** The method of any one of claim 9, wherein the compound is 4-Aminobenzoic acid (pABA) or 3-Aminobenzoic acid (mABA).

**11.** The use of a compound of Formula (I) or a salt thereof as defined in any one of claims 1 to 10 as a safener or as a plant growth promoter.

**12.** An agrochemical composition, preferably a safener composition, comprising a compound of Formula (I) or a salt thereof as defined in any one of claims 1 to 10.

**13.** The composition of claim 12, further comprising a herbicide.

**14.** A method of detecting a receptor molecule binding to a compound of Formula (I) as defined in any one of claims 1 to 10, comprising (i) attaching the compound of Formula (I) or a salt thereof to a solid support to obtain a modified solid support, (ii) contacting the modified solid support with homogenized plant material, (iii) identifying and optionally characterizing plant molecules bound to the modified solid support.

**15.** A method of screening for plant growth-promoting compounds and/or plant safeners, comprising providing a derivative of a compound of Formula (I), and determining the plant growth promoting activity and/or the stress tolerance conferring activity of the derivative.

Figure 1

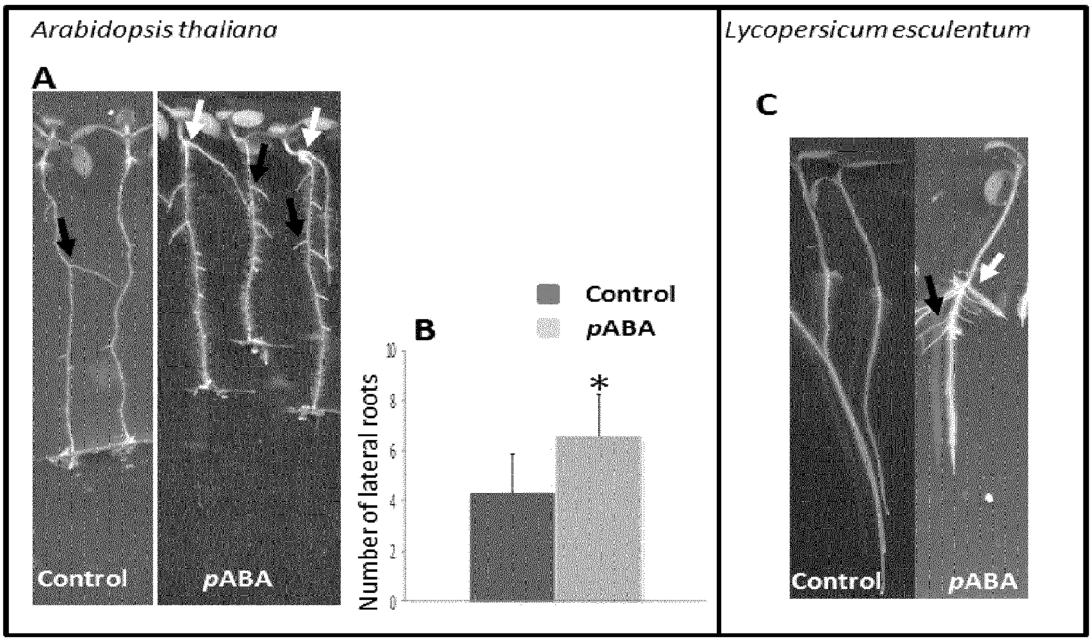


Figure 2

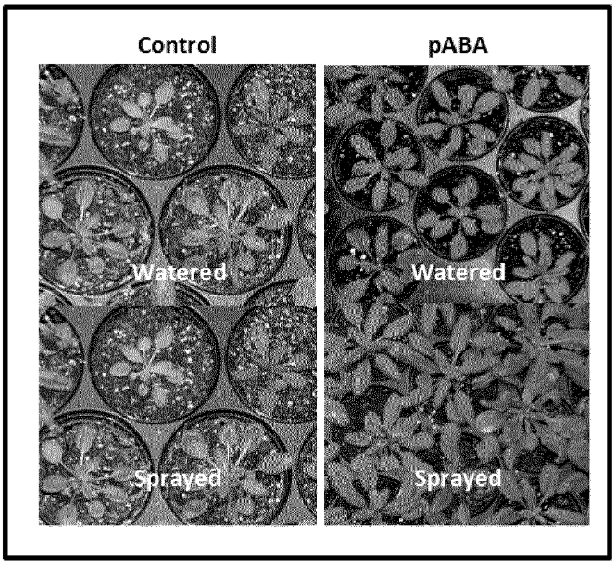


Figure 3

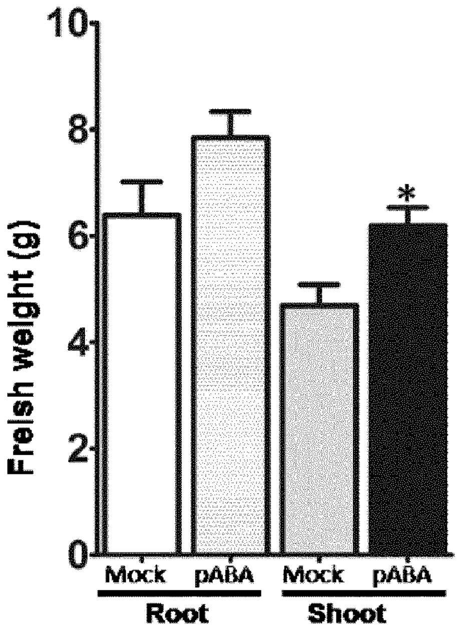

Figure 4

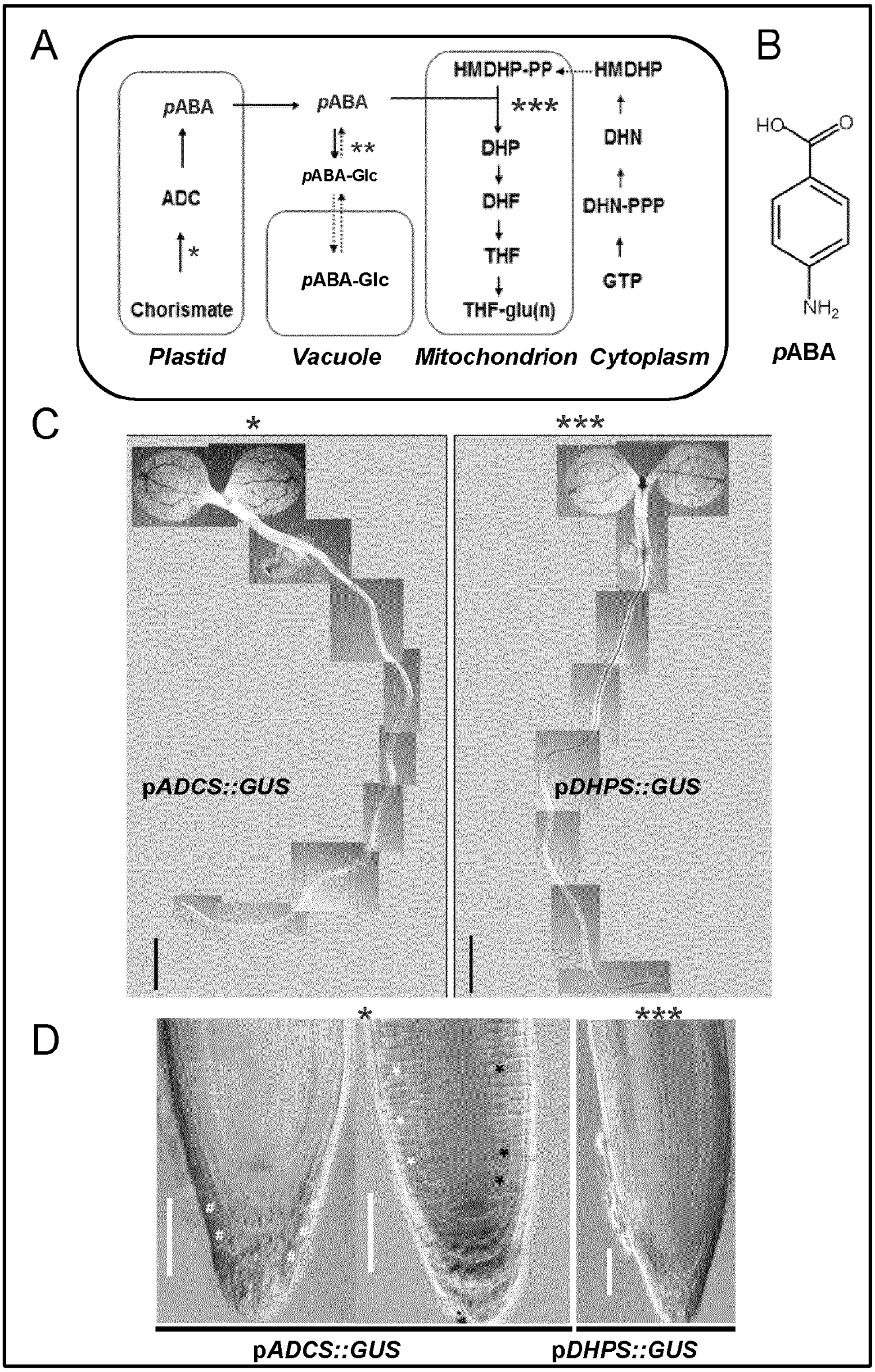
A
pABA
ADC
*
Chorismate
pABA
**
pABA-Glc
pABA-Glc
HMDHP-PP
HMDHP
***
DHP
DHF
THF
THF-glu(n)
DHN
DHN-PPP
GTP
Plastid
Vacuole
Mitochondrion
Cytoplasm
B
HO
O
NH2
pABA
C
*
***
pADCS::GUS
pDHPS::GUS
D
*
***
pADCS::GUS
pDHPS::GUS

Figure 5

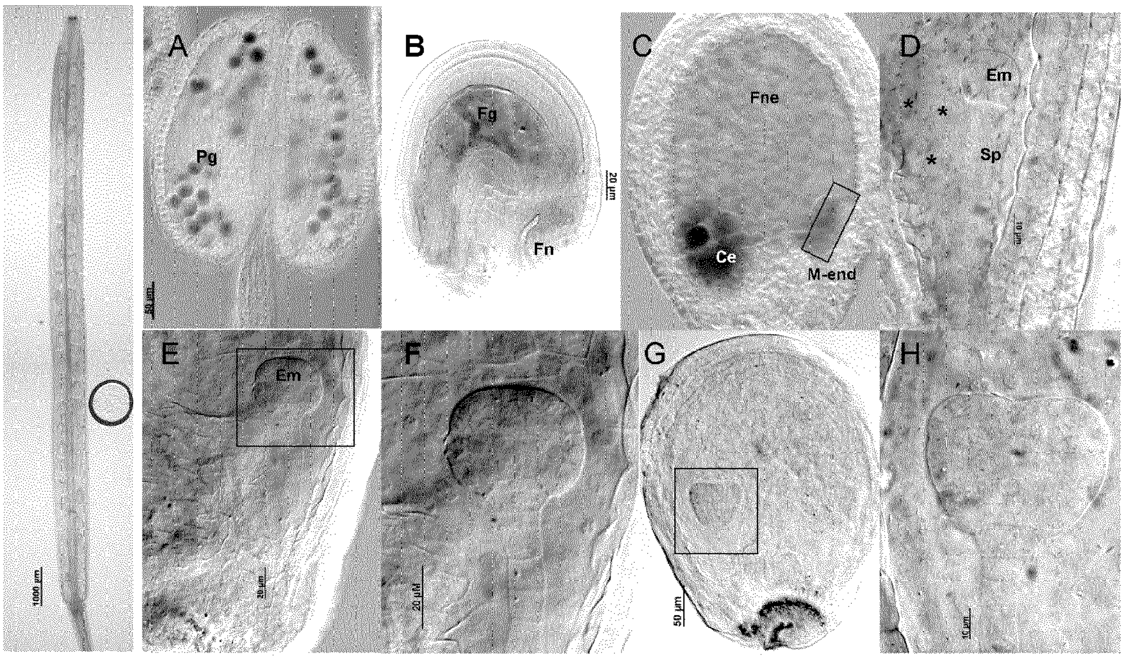


Pg: pollen grain
Fn: finiculus
Fg: femele gametophyte
Ce: chalazal endosperm
Fne: free nuclear endosperm
Em: embryo
Sp: suspensor
M-end: micropilar endosperm

Figure 6

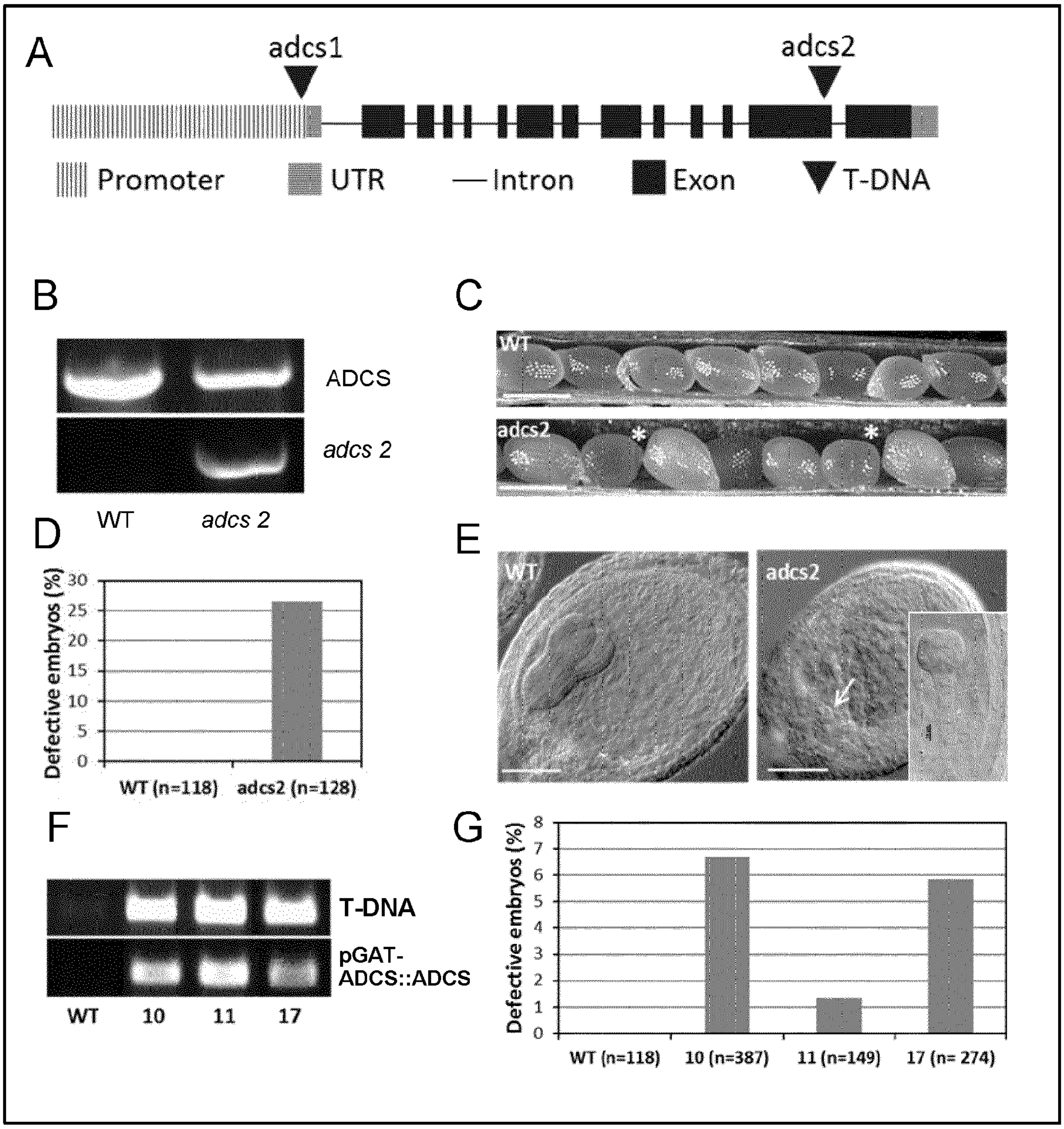
A
adcs1
adcs2
Promoter
UTR
Intron
Exon
T-DNA
B
ADCS
adcs 2
WT
adcs 2
C
WT
adcs2
D
Defective embryos (%)
30
25
20
15
10
5
0
WT (n=118)
adcs2 (n=128)
E
WT
adcs2
F
T-DNA
pGAT-ADCS::ADCS
WT
10
11
17
G
Defective embryos (%)
8
7
6
5
4
3
2
1
0
WT (n=118)
10 (n=387)
11 (n=149)
17 (n= 274)

Figure 7

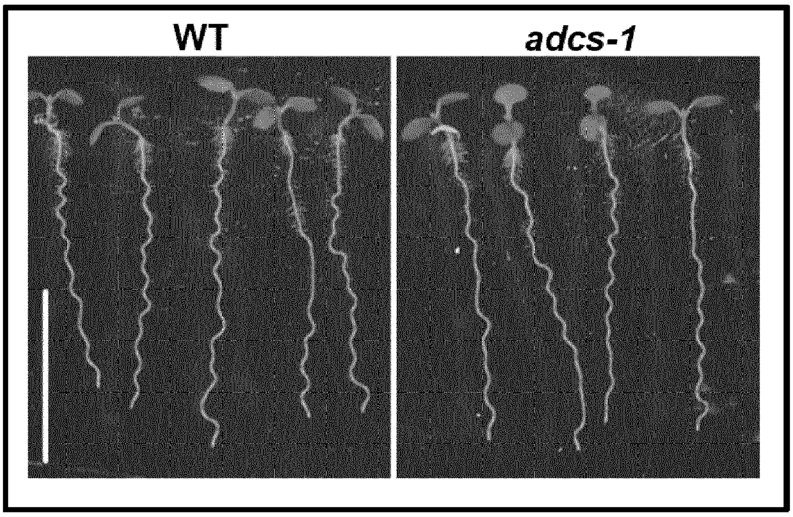


Figure 8

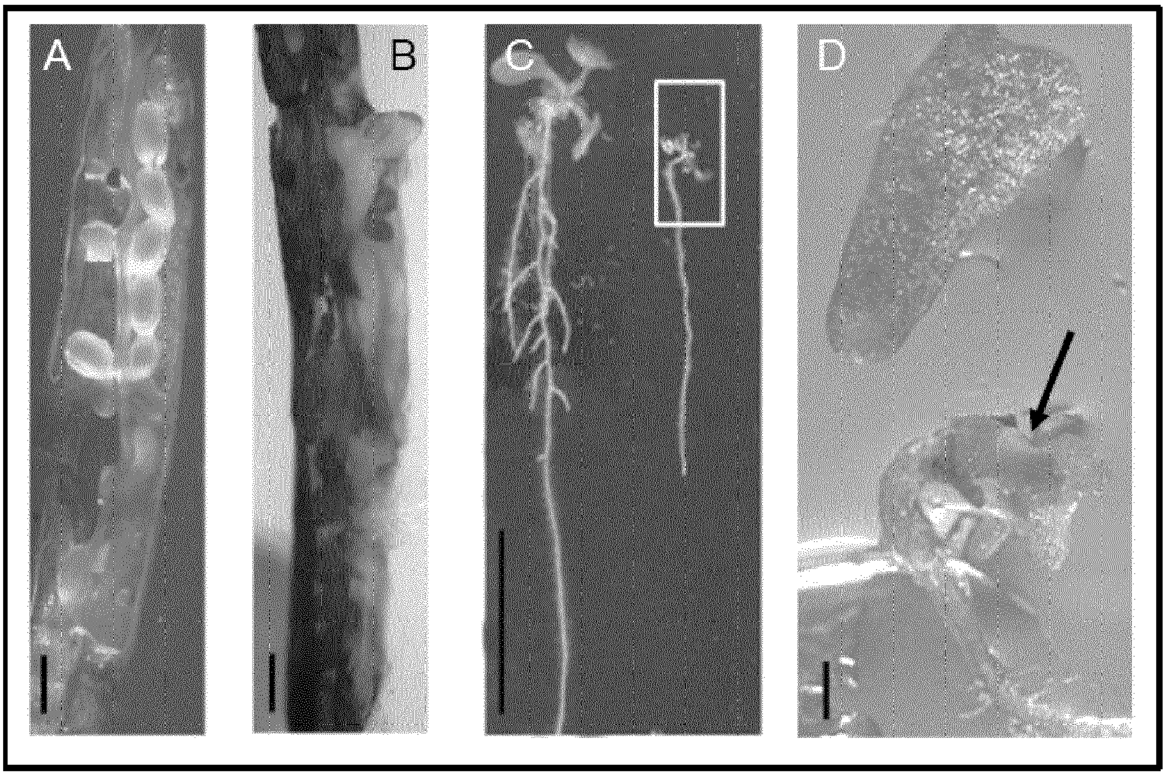

Figure 9

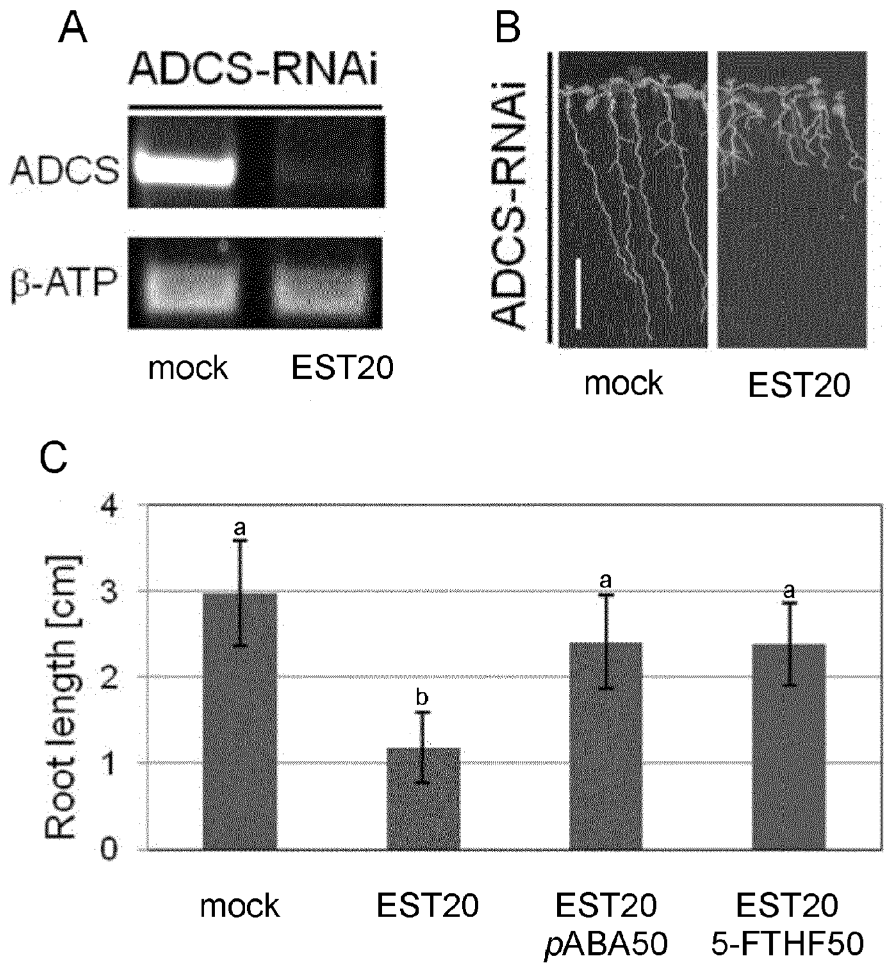
A
ADCS-RNAi
ADCS
β-ATP
mock
EST20
B
ADCS-RNAi
mock
EST20
C
Root length [cm]
4
3
2
1
0
a
b
a
a
mock
EST20
EST20
pABA50
EST20
5-FTHF50

Figure 10

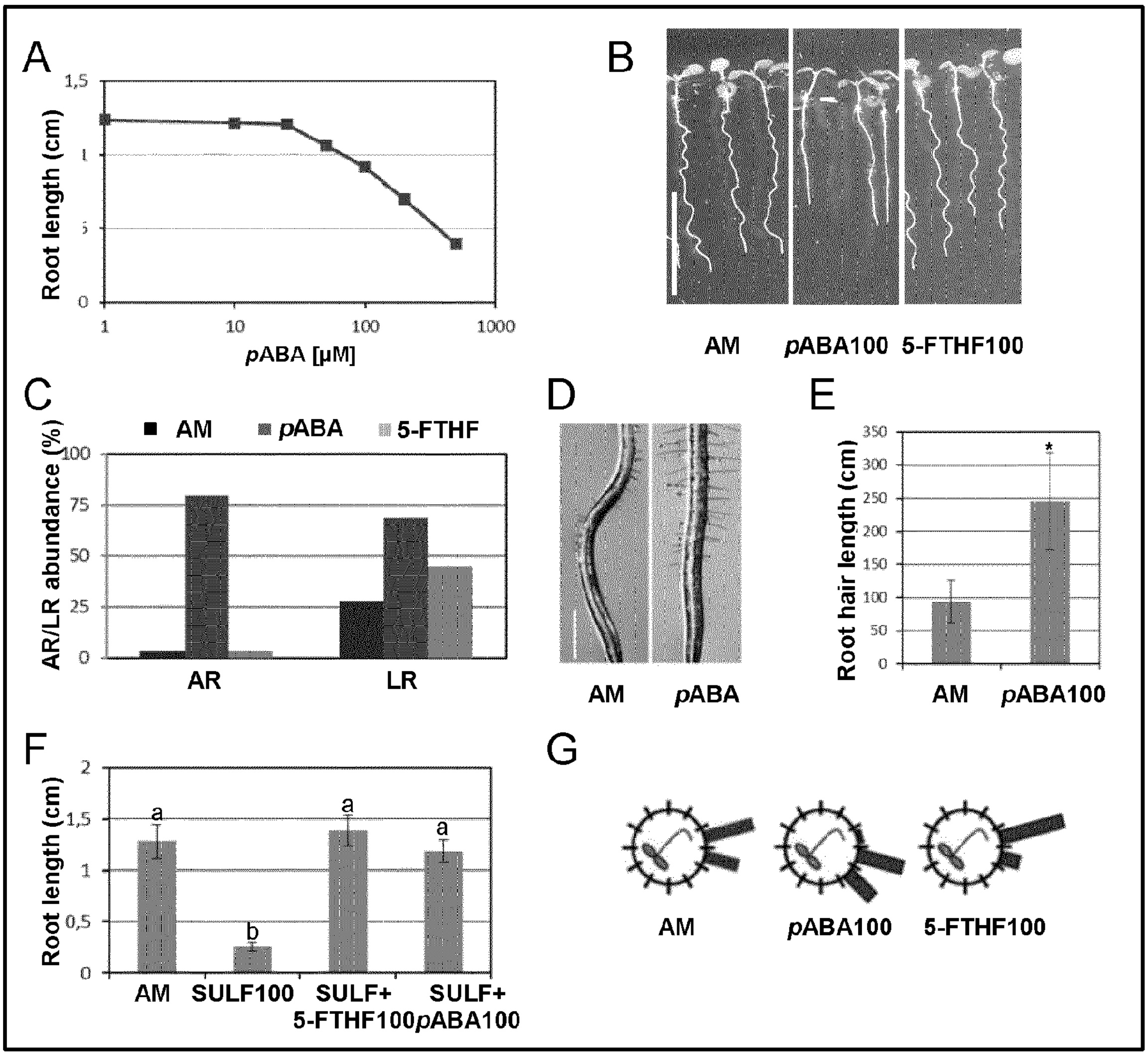
A
Root length (cm)
1,5
1
0
1
10
100
1000
pABA [µM]
B
AM
pABA100
5-FTHF100
C
AM
pABA
5-FTHF
AR/LR abundance (%)
100
75
50
25
0
AR
LR
D
AM
pABA
E
Root hair length (cm)
350
300
250
200
150
100
50
0
*
AM
pABA100
F
Root length (cm)
2
1,5
1
0,5
0
a
b
a
a
AM
SULF100
SULF+
5-FTHF100
SULF+
pABA100
G
AM
pABA100
5-FTHF100

Figure 11

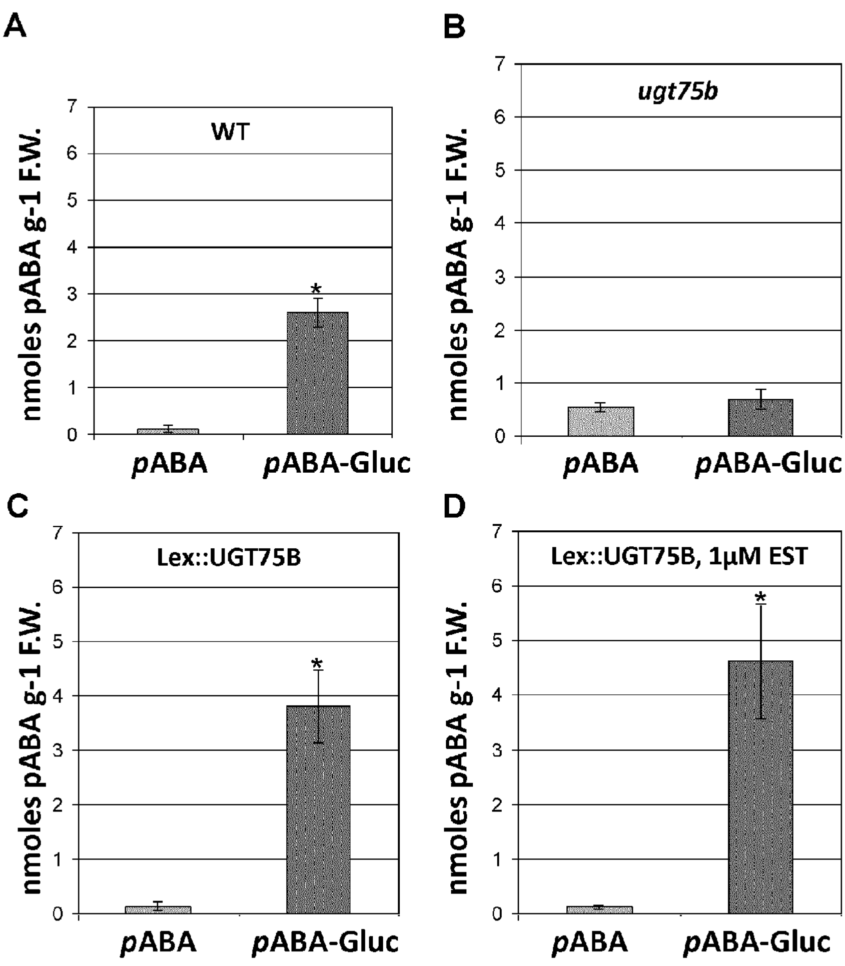


Figure 12

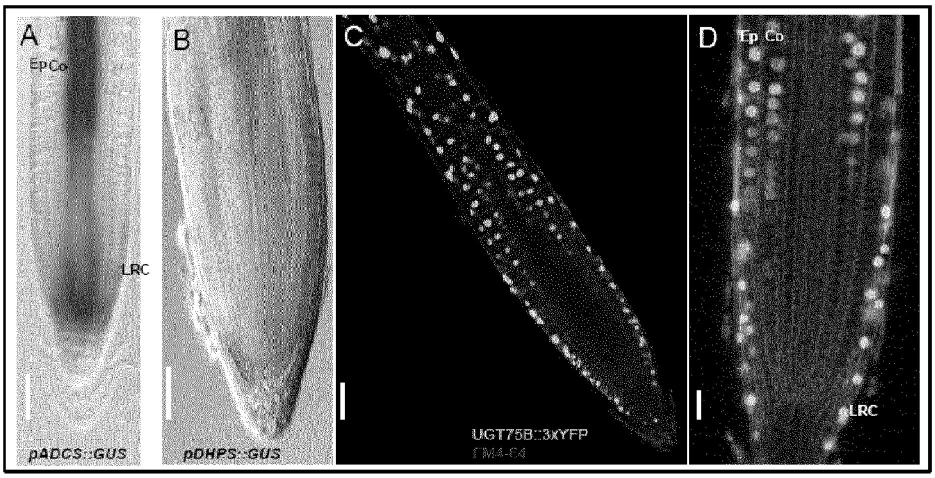

Figure 13

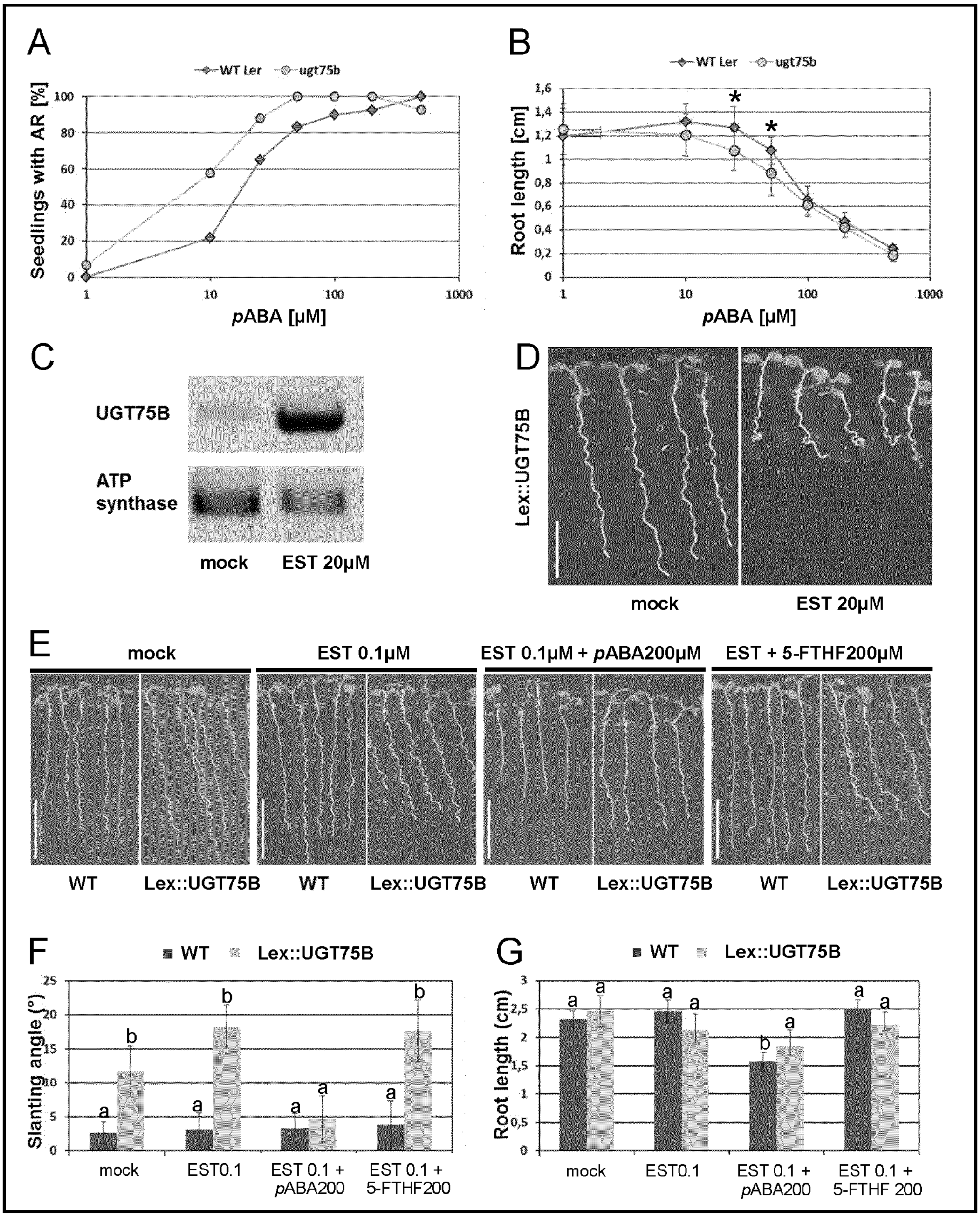
A
WT Ler
ugt75b
Seedlings with AR [%]
pABA [µM]
B
Root length [cm]
pABA [µM]
C
UGT75B
ATP synthase
mock
EST 20µM
D
Lex::UGT75B
mock
EST 20µM
E
mock
EST 0.1µM
EST 0.1µM + pABA200µM
EST + 5-FTHF200µM
WT
Lex::UGT75B
F
WT
Lex::UGT75B
Slanting angle (°)
mock
EST0.1
EST 0.1 + pABA200
EST 0.1 + 5-FTHF200
G
Root length (cm)
EST 0.1 + 5-FTHF 200

Figure 14

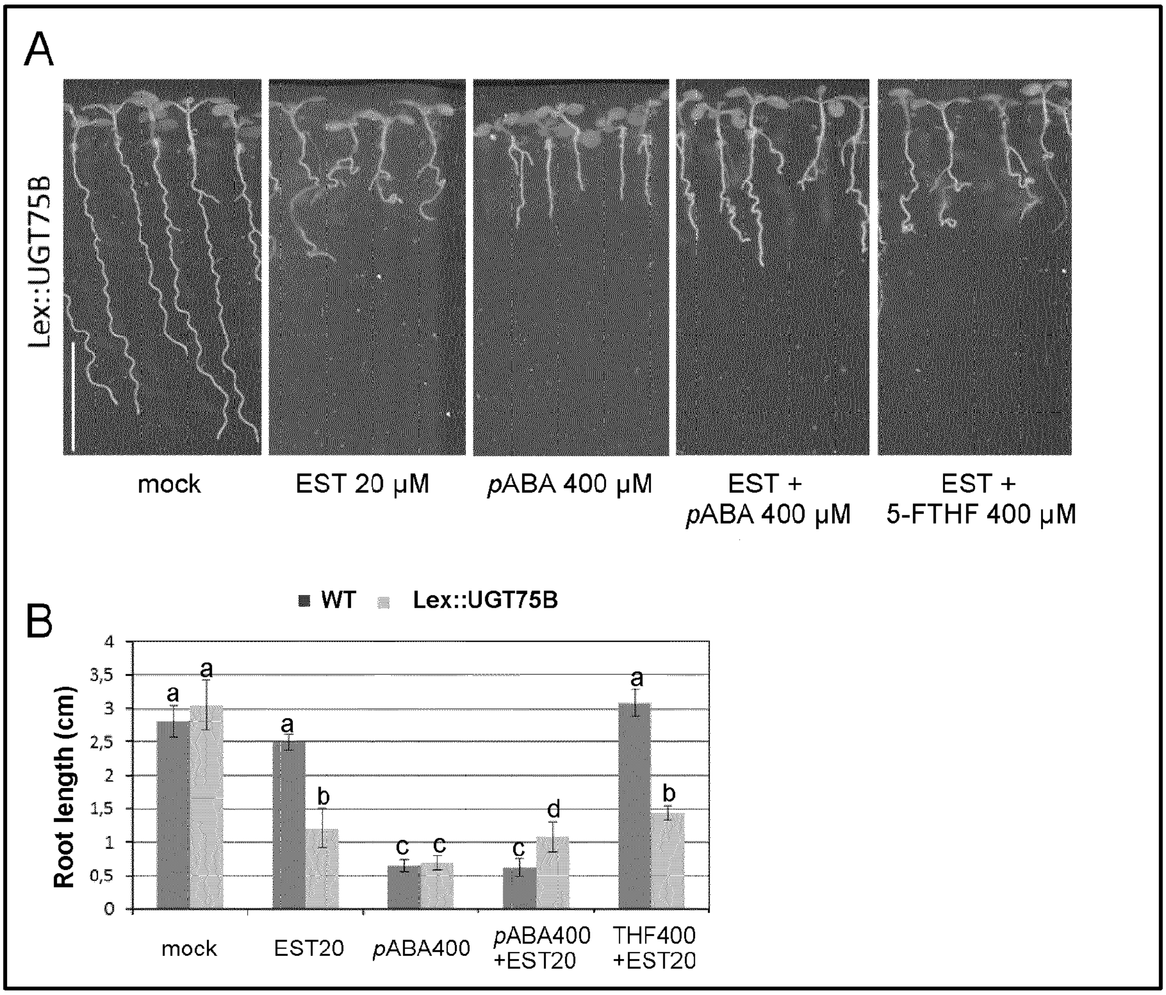
A
Lex::UGT75B
mock
EST 20 µM
pABA 400 µM
EST +
pABA 400 µM
EST +
5-FTHF 400 µM
B
WT
Lex::UGT75B
Root length (cm)
4
3,5
3
2,5
2
1,5
1
0,5
0
a
a
a
b
c
c
c
d
a
b
mock
EST20
pABA400
pABA400
+EST20
THF400
+EST20

Figure 15

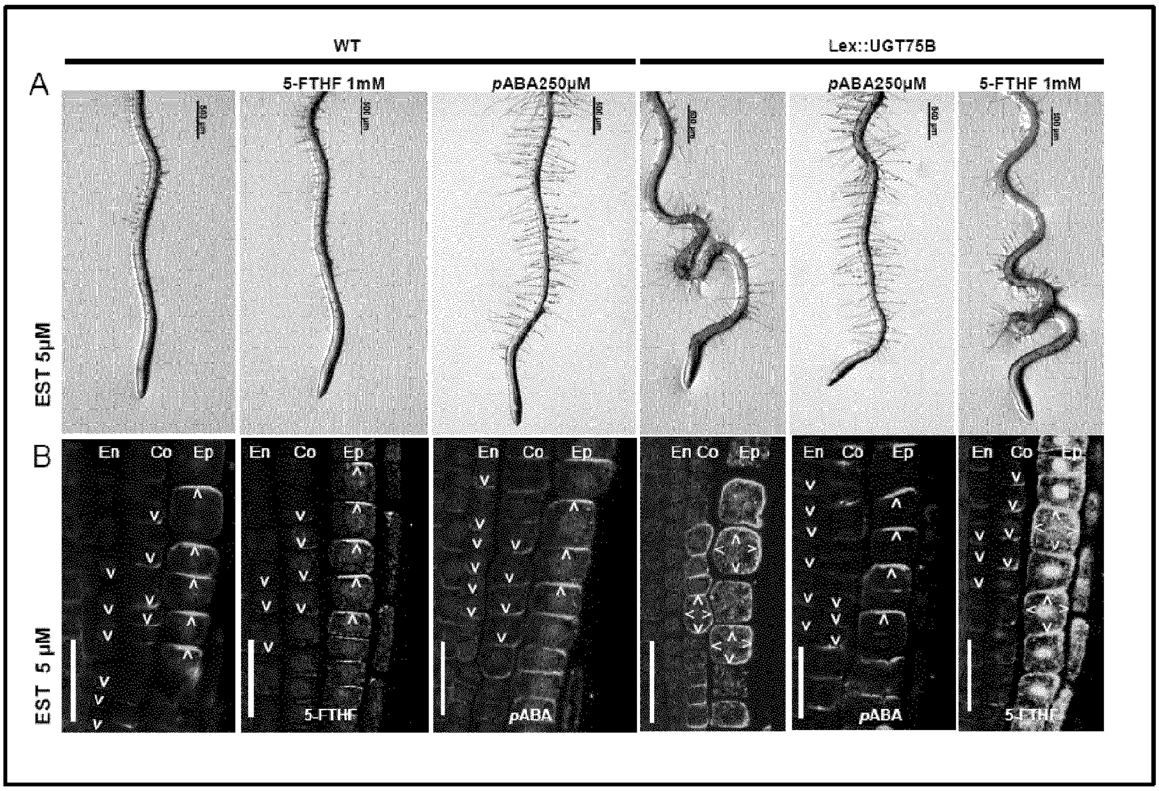


Figure 16

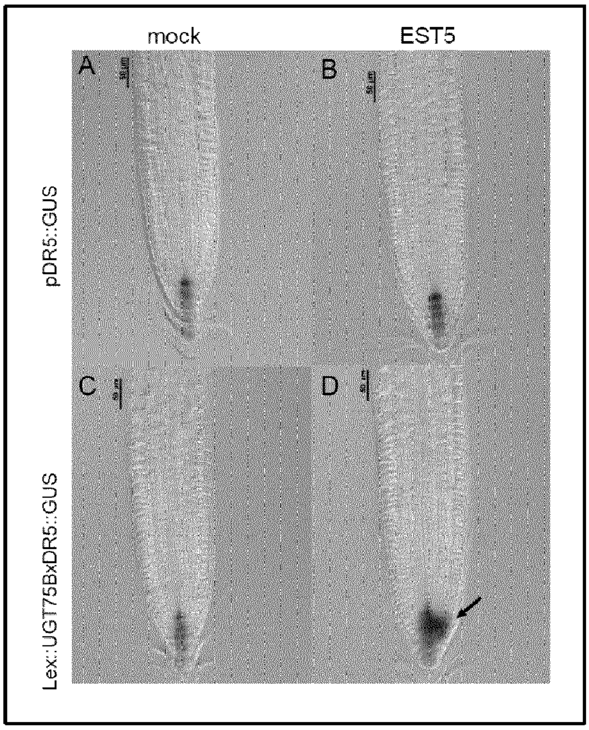

## Figure 17

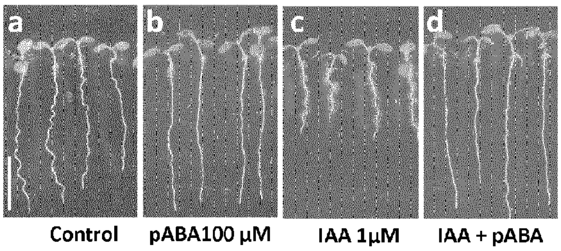


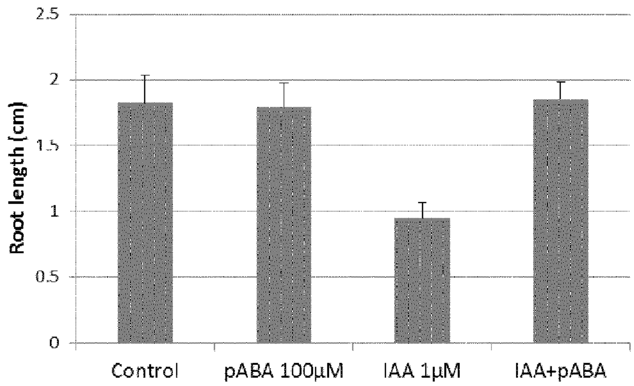


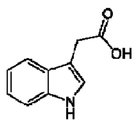

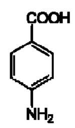

indole-3-acetic acid (IAA) 4-aminobenzoic acid (*p*ABA)

## Figure 18

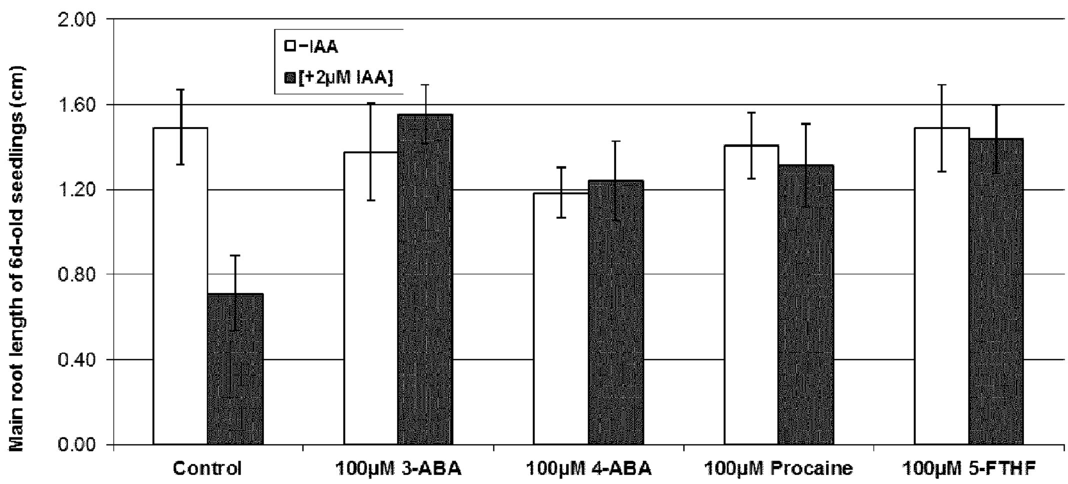

## Figure 19

**Mock**

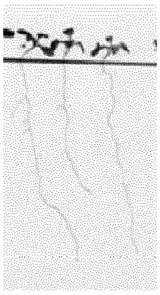

**pABA**

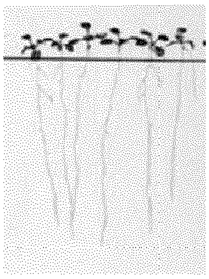

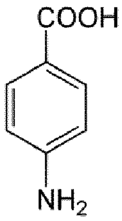

4-aminobenzoic acid (*p*ABA)

**$NO_2$BA**

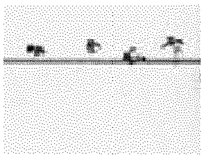

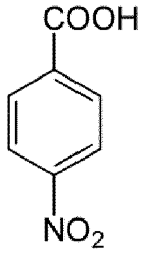

4-nitrobenzoic acid ($NO_2$BA)

**Cl-BA**

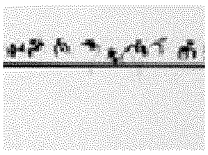

**I-BA**

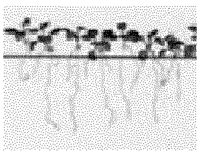

**F-BA**

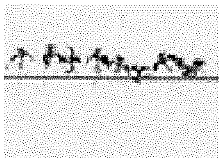

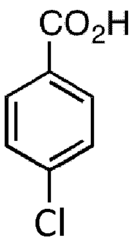

4-Chlorobenzoic acid

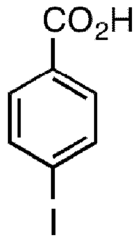

4-Iodobenzoic acid

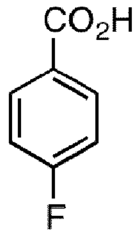

4-Fluorobenzoic acid

Europäisches Patentamt
European Patent Office
Office européen des brevets

# EUROPEAN SEARCH REPORT

Application Number
EP 13 16 4954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 846 908 A (NONOMURA ARTHUR M [US] ET AL) 8 December 1998 (1998-12-08) * Column 1, l. 15-22; column 7, l. 63-66; column 8, l. 27-67; column 9, l. 1-16; column 15, l. 30-67; column 16, l. 1-24; Tables 4-5, 8 * ----- | 1,3-13, 15 | INV. A01N37/10 |
| X | CZ 9 203 556 A3 (SOCHA JAROMIR [CZ]; SOCHA VIT ING [CZ]) 12 July 1995 (1995-07-12) * the whole document * ----- | 1,3-13, 15 | |
| X | RO 114 723 B1 (ROIBU CONSTANTIN [RO]; CHITU VIORICA [RO]; NEAMTIU ILEANA [RO]; VALCEA) 30 July 1999 (1999-07-30) * the whole document * ----- | 1,3-13, 15 | |
| X | EP 0 465 907 A1 (STOPPANI LUIGI SPA [IT]) 15 January 1992 (1992-01-15) * page 1, page 2, l. 10-20; claims 1, 5, 9, 11 * ----- | 1,3-13, 15 | TECHNICAL FIELDS SEARCHED (IPC) |
| X | CRISAN MANUELA ET AL: "Inhibitory effects of some synthetic monoethanolamine salts of para-substituted benzoic acids and corresponding benzoic acids on cucumber seed germination", JOURNAL OF PLANT INTERACTIONS,, vol. 2, no. 1-3, 2007, pages 53-61, XP009108704, DOI: 10.1080/17429140701422496 * page 58, right column; Compounds I-IV * ----- -/-- | 1,3-13, 15 | A01N |

~~The present search report has been drawn up for all claims~~

| Place of search | Date of completion of the search | Examiner |
|---|---|---|
| Munich | 15 January 2014 | Bueno Torres, Pilar |

7

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 13 16 4954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE CA [Online] CHEMICAL ABSTRACTS SERVICE, COLUMBUS, OHIO, US; GROZAV, MATA ET AL: "Quinoline salts of carboxylic acids with potential biological activity. 3. Salts of different aromatic carboxylic acids with 8-hydroxyquinoline", XP002713368, retrieved from STN Database accession no. 2006:311044 * abstract * & GROZAV, MATA ET AL: "Quinoline salts of carboxylic acids with potential biological activity. 3. Salts of different aromatic carboxylic acids with 8-hydroxyquinoline", REVISTA DE CHIMIE (BUCHAREST, ROMANIA) , 57(2), 224-225 CODEN: RCBUAU; ISSN: 0034-7752, 2006, ----- | 1,3-13, 15 | |
| X | LAICHICI, MARIA ET AL: "The auxin activity of some benzoic acid salts with ethanolamines on plants", PROCEEDINGS OF THE ROMANIAN ACADEMY, SERIES B: CHEMISTRY, LIFE SCIENCES AND GEOSCIENCES, vol. 5, no. 3, 2004, pages 163-165, XP009172770, * the whole document * ----- | 1,3-13, 15 | TECHNICAL FIELDS SEARCHED (IPC) |
| X | EP 1 982 591 A1 (KUMIAI CHEMICAL INDUSTRY CO [JP]) 22 October 2008 (2008-10-22) * the whole document * ----- | 1,3-13, 15 | |
| X | US 3 323 894 A (BUKOVAC MARTIN J) 6 June 1967 (1967-06-06) * the whole document * ----- -/-- | 1,3-13, 15 | |

~~The present search report has been drawn up for all claims~~

7

| Place of search | Date of completion of the search | Examiner |
|---|---|---|
| Munich | 15 January 2014 | Bueno Torres, Pilar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 13 16 4954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 028 976 A (FISONS PEST CONTROL LTD) 11 May 1966 (1966-05-11) * the whole document * | 1,3-13, 15 | |
| X | R. MUIR AND C. HANSCH: "The relationship of structure and plant-growth activity of substituted benzoic acids and phenoxyacetic acids", PLANT PHYSIOLOGY, vol. 26, 1951, pages 369-374, XP002713369, * Table I * | 1,3-13, 15 | |
| X | PYBUS, MARY B. ET AL: "Studies on plant growth-regulating substances.XIII. Chloro- and methyl-substituted phenoxyacetic and benzoic acids.", ANN. APPL. BIOL., vol. 47, no. 1, 1959, pages 173-181, XP002713370, * Table I. * | 1,3-13, 15 | |
| X | C.S. JAMES ET AL: "Studies on plant growth-regulating substances XXVIII.Halogen-substitued benzoic acids", ANN. APPL. BIOL., vol. 63, 1969, pages 205-210, XP002713371, * Tables 1-3 * | 1,3-13, 15 | TECHNICAL FIELDS SEARCHED (IPC) |
| X | WO 99/25191 A1 (CROWN IN THE RIGHT OF THE STAT [AU]; SENARATNA TISSA [AU]; TOUCHELL DA) 27 May 1999 (1999-05-27) * page 6, l. 6; ex 1:Table 6 * | 11-13,15 | |
| X | US 2005/037922 A1 (BICKERS UDO [DE] ET AL) 17 February 2005 (2005-02-17) * the whole document * | 11-13,15 | |

-/--

~~The present search report has been drawn up for all claims~~

7

| Place of search | Date of completion of the search | Examiner |
|---|---|---|
| Munich | 15 January 2014 | Bueno Torres, Pilar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 13 16 4954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 776 863 A1 (KUMIAI CHEMICAL INDUSTRY CO [JP]) 25 April 2007 (2007-04-25)<br>* the whole document *<br>----- | 11-13,15 | |
| X | US 2009/082206 A1 (IKEUCHI TOSHIHIRO [JP] ET AL) 26 March 2009 (2009-03-26)<br>* the whole document *<br>----- | 11-13,15 | |
| X | JP 2010 163420 A (NAT FEDERATION AGRIC COOP ASS) 29 July 2010 (2010-07-29)<br>* the whole document *<br>----- | 11-13,15 | |
| | | | TECHNICAL FIELDS SEARCHED (IPC) |

7

~~The present search report has been drawn up for all claims~~

| Place of search | Date of completion of the search | Examiner |
|---|---|---|
| Munich | 15 January 2014 | Bueno Torres, Pilar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

EPO FORM 1503 03.82 (P04C01)

Europäisches Patentamt
European Patent Office
Office européen des brevets

Application Number
EP 13 16 4954

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

11-13, 15(completely); 1, 3-10(partially)

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 13 16 4954

The Search Division considers that the present European patent application does not comply with the requirements of unity of invention and relates to several inventions or groups of inventions, namely:

1. claims: 12, 13(completely); 1, 3-11, 15(partially)

   A method of promoting the growth of a plant comprising applying to the plant a compound of formula (I) or a salt thereof characterized in that the pKa value of the compound is at least 4.0.
   Agrochemical compositions comprising a compound of formula (I) or a salt thereof characterized in that the pKa value of the compound is at least 4.0.
   Use of a compound of formula (I) as a plant growth promoter.
   Methods of screening thereof.

---

2. claims: 1-10(partially)

   A method of improving the stress tolerance of a plant comprising applying to the plant a compound of formula (I) or a salt thereof characterized in that the pKa value of the compound is at least 4.0.

---

3. claims: 1-10(partially)

   A method of promoting the growth of a plant and improving the stress tolerance of a plant comprising applying to the plant a compound of formula (I) or a salt thereof characterized in that the pKa value of the compound is at least 4.0.

---

4. claims: 11, 15(all partially)

   Use of a compound of formula (I) as safener. Methods of screening thereof

---

5. claim: 14

   A method of detecting a receptor molecule binding to a compound of formula (I) as defined in any of claims 1 to 10, comprising (i) attaching the compound of formula (I) or a salt thereof to a solid support to obtain a modified solid support, (ii) contacting the modified solid support with homogenized plant material, (iii) identifying and optionally characterizing plant molecules bound to the modified solid support

---

# ANNEX TO THE EUROPEAN SEARCH REPORT ON EUROPEAN PATENT APPLICATION NO. EP 13 16 4954

This annex lists the patent family members relating to the patent documents cited in the above-mentioned European search report. The members are as contained in the European Patent Office EDP file on
The European Patent Office is in no way liable for these particulars which are merely given for the purpose of information.

15-01-2014

| Patent document cited in search report | Publication date | Patent family member(s) | Publication date |
|---|---|---|---|
| US 5846908 A | 08-12-1998 | US 5846908 A | 08-12-1998 |
| | | US 6121195 A | 19-09-2000 |
| CZ 9203556 A3 | 12-07-1995 | NONE | |
| RO 114723 B1 | 30-07-1999 | NONE | |
| EP 0465907 A1 | 15-01-1992 | EP 0465907 A1 | 15-01-1992 |
| | | IT 1249004 B | 11-02-1995 |
| | | JP H06340506 A | 13-12-1994 |
| EP 1982591 A1 | 22-10-2008 | EP 1982591 A1 | 22-10-2008 |
| | | JP 5205063 B2 | 05-06-2013 |
| | | US 2009111693 A1 | 30-04-2009 |
| | | WO 2007091502 A1 | 16-08-2007 |
| US 3323894 A | 06-06-1967 | NONE | |
| GB 1028976 A | 11-05-1966 | NONE | |
| WO 9925191 A1 | 27-05-1999 | NONE | |
| US 2005037922 A1 | 17-02-2005 | AR 045201 A1 | 19-10-2005 |
| | | AU 2004264297 A1 | 24-02-2005 |
| | | BR PI0413365 A | 17-10-2006 |
| | | CA 2534742 A1 | 24-02-2005 |
| | | CN 1829437 A | 06-09-2006 |
| | | CR 8200 A | 25-11-2008 |
| | | DE 10335726 A1 | 03-03-2005 |
| | | EP 1653804 A1 | 10-05-2006 |
| | | JP 2007501197 A | 25-01-2007 |
| | | KR 20060120574 A | 27-11-2006 |
| | | MX PA06001421 A | 15-05-2006 |
| | | RS 20060039 A | 31-12-2007 |
| | | US 2005037922 A1 | 17-02-2005 |
| | | WO 2005015994 A1 | 24-02-2005 |
| | | ZA 200600090 A | 31-01-2007 |
| EP 1776863 A1 | 25-04-2007 | BR PI0514239 A | 03-06-2008 |
| | | CN 101001523 A | 18-07-2007 |
| | | CN 102578084 A | 18-07-2012 |
| | | CN 102578085 A | 18-07-2012 |
| | | CN 102578086 A | 18-07-2012 |
| | | CN 102578087 A | 18-07-2012 |
| | | CN 102599166 A | 25-07-2012 |
| | | EP 1776863 A1 | 25-04-2007 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 13 16 4954

This annex lists the patent family members relating to the patent documents cited in the above-mentioned European search report. The members are as contained in the European Patent Office EDP file on
The European Patent Office is in no way liable for these particulars which are merely given for the purpose of information.

15-01-2014

| Patent document cited in search report | Publication date | Patent family member(s) | Publication date |
|---|---|---|---|
| | | JP 4832302 B2 | 07-12-2011 |
| | | KR 20070053744 A | 25-05-2007 |
| | | TW I355895 B | 11-01-2012 |
| | | US 2009105078 A1 | 23-04-2009 |
| | | WO 2006016527 A1 | 16-02-2006 |
| US 2009082206 A1 | 26-03-2009 | CN 101217872 A | 09-07-2008 |
| | | JP 5090165 B2 | 05-12-2012 |
| | | KR 20080030069 A | 03-04-2008 |
| | | KR 20130052662 A | 22-05-2013 |
| | | US 2009082206 A1 | 26-03-2009 |
| | | US 2012100992 A1 | 26-04-2012 |
| | | WO 2007007629 A1 | 18-01-2007 |
| JP 2010163420 A | 29-07-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- The Pesticide Manual. The British Crop Protection Council, 2003
- Modern Crop Protection Compounds. vol. 1
- **K. MARTENS.** Spray Drying Handbook. G. Goodwin Ltd, 1979
- **W. VAN VALKENBURG.** Pesticide Formulations. Marcel Dekker, 1973
- Chemische Technologie. **WINNACKER-KÜCHLER.** Chemical Technology. C. Hanser Verlag, 1986, vol. 7
- Perry's Chemical Engineer's Handbook. McGraw-Hill, 1973, 8-57
- **MCCUTCHEON'S.** Detergents and Emulsifiers Annual. MC Publ. Corp,
- **C. MARSDEN.** Solvents Guide. Interscience, 1963
- **H. VON OLPHEN.** Introduction to Clay Colloid Chemistry. J. Wiley & Sons
- Grenzflächenaktive Äthylenoxidaddukte. **SCHÖNFELDT.** Surface-active ethylene oxide adducts. Wiss. Verlagsgesellschaft, 1976
- **SISLEY ; WOOD.** Encyclopedia of Surface Active Agents. Chem. Publ. Co. Inc, 1964
- **WATKINS.** Handbook of Insecticide Dust Diluents and Carriers. Darland Books
- **WINNACKER-KÜCHLER.** Chemische Technologie. C. Hanser Verlag, 1986, vol. 7
- **HOSSAIN T et al.** *Proc. Natl. Acad. Sci.,* 2004, vol. 101, 5158
- **SAHR et al.** *Biochem. J.,* 2006, vol. 396, 157-162
- Metabolism of folates in plants. **RAVANEL S ; DOUCE R ; RÉBEILLÉ F.** Advances in Botanical Research. The Netherlands: Elsevier, 2011, vol. 59, 67-106
- Folate Biosynthesis, Turnover, and Transport in Plants. **HANSON AD ; GREGORY JF.** Annual Review of Plant Biology. Palo Alto: Annual Reviews, 2001, vol. 62, 105-125
- **MEHRSHAHI P ; GONZALEZ-JORGE S ; AKHTAR TA ; WARD JL ; SANTOYO-CASTELAZO A et al.** Functional analysis of folate polyglutamylation and its essential role in plant metabolism and development. *Plant Journal,* 2010, vol. 64, 267-279
- **BASSET G ; QUINLIVAN EP ; ZIEMAK MJ ; DÍAZ DE LA GARZA R ; FISCHER M et al.** Folate synthesis in plants: The first step of the pterin branch is mediated by a unique bimodular GTP cyclohydrolase I. *Proceedings of the National Academy of Sciences,* 2002, vol. 99, 12489-12494
- **CAMARA D ; RICHEFEU-CONTESTO C ; GAMBONNET B ; DUMAS R ; RÉBEILLÉ F.** The synthesis of pABA: Coupling between the glutamine amidotransferase and aminodeoxychorismate synthase domains of the bifunctional aminodeoxychorismate synthase from Arabidopsis thaliana. *Arch Biochem Biophys,* 2011, vol. 505, 83-90
- **BASSET GJC ; RAVANEL S ; QUINLIVAN EP ; WHITE R ; GIOVANNONI JJ et al.** Folate synthesis in plants: the last step of the p-aminobenzoate branch is catalyzed by a plastidial aminodeoxychorismate lyase. *Plant Journal,* 2004, vol. 40, 453-461
- **REBEILLE F ; MACHEREL D ; MOUILLON J-M ; GARIN J ; DOUCE R.** Folate biosynthesis in higher plants: purification and molecular cloning of a bifunctional 6-hydroxymethyl-7,8-dihydropterin pyrophosphokinase/7,8-dihydropteroate synthase localized in mitochondria. *EMBO J,* 1997, vol. 16, 947-957
- **ISHIKAWA T ; MACHIDA C ; YOSHIOKA Y ; KITANO H ; MACHIDA Y.** The GLOBULAR ARREST1 gene, which is involved in the biosynthesis of folates, is essential for embryogenesis in Arabidopsis thaliana. *Plant Journal,* 2003, vol. 33, 235-244
- **NEUBURGER M ; REBEILLE F ; JOURDAIN A ; NAKAMURA S ; DOUCE R.** Mitochondria are a major site for folate and thymidylate synthesis in plants. *Journal of Biological Chemistry,* 1996, vol. 271, 9466-9472
- **QUINLIVAN EP ; ROJE S ; BASSET G ; SHACHAR-HILL Y ; GREGORY JF et al.** The folate precursor p-aminobenzoate is reversibly converted to its glucose ester in the plant cytosol. *Journal of Biological Chemistry,* 2003, vol. 278, 20731-20737
- **EUDES A ; BOZZO GG ; WALLER JC ; NAPONELLI V ; LIM EK et al.** Metabolism of the folate precursor p-aminobenzoate in plants - Glucose ester formation and vacuolar storage. *Journal of Biological Chemistry,* 2008, vol. 283, 15451-15459
- **LUDWIG-MÜLLER J.** Auxin conjugates: their role for plant development and in the evolution of land plants. *Journal of Experimental Botany,* 2011, vol. 62, 1757-1773

- **SAHR T ; RAVANEL S ; REBEILLE F.** Tetrahydrofolate biosynthesis and distribution in higher plants. *Biochemical Society Transactions,* 2005, vol. 33, 758-762
- **JABRIN S ; RAVANEL S ; GAMBONNET B ; DOUCE R ; REBEILLE F.** One-carbon metabolism in plants. Regulation of tetrahydrofolate synthesis during germination and seedling development. *Plant Physiology,* 2003, vol. 131, 1431-1439
- **NAWY T ; LEE JY ; COLINAS J ; WANG JY ; THONGROD SC et al.** Transcriptional profile of the Arabidopsis root quiescent center. *Plant Cell,* 2005, vol. 17, 1908-1925
- **BASSET GJC ; QUINLIVAN EP ; RAVANEL S ; REBEILLE F ; NICHOLS BP et al.** Folate synthesis in plants: The p-aminobenzoate branch is initiated by a bifunctional PABA-PabB protein that is targeted to plastids. *Proceedings of the National Academy of Sciences of the United States of America,* 2004, vol. 101, 1496-1501
- **JEFFERSON RA ; KAVANAGH TA ; BEVAN MW.** GUS fusions: beta-glucuronidase as a sensitive and versatile gene fusion marker in higher plants. *EMBO J,* 1987, vol. 6, 3901-3907
- **HILSON P ; ALLEMEERSCH J ; ALTMANN T ; AUBOURG S ; AVON A et al.** Versatile gene-specific sequence tags for Arabidopsis functional genomics: transcript profiling and reverse genetics applications. *Genome Res,* 2004, vol. 14, 2176-2189
- **SANKAR DVS.** Para-Amino-Benzoic Acid and Sulphanilamide in the Nutrition of Neurospora-Crassa. *Nature,* 1958, vol. 181, 629-630
- **OKADA K ; SHIMURA Y.** Reversible Root-Tip Rotation in Arabidopsis Seedlings Induced by Obstacle-Touching Stimulus. *Science,* 1990, vol. 250, 274-276
- **SARKAR AK ; LUIJTEN M ; MIYASHIMA S ; LENHARD M ; HASHIMOTO T et al.** Conserved factors regulate signalling in Arabidopsis thaliana shoot and root stem cell organizers. *Nature,* 2007, vol. 446, 811-814
- **UGARTECHEA-CHIRINO Y ; SWARUP R ; SWARUP K ; PERET B ; WHITWORTH M et al.** The AUX1 LAX family of auxin influx carriers is required for the establishment of embryonic root cell organization in Arabidopsis thaliana. *Annals of Botany (London,* 2010, vol. 105, 277-289
- **GEISLER M ; MURPHY AS.** The ABC of auxin transport: the role of p-glycoproteins in plant development. *FEBS Lett,* 2006, vol. 580, 1094-1102
- **PAPONOV IA ; TEALE WD ; TREBAR M ; BLILOU I ; PALME K.** The PIN auxin efflux facilitators: evolutionary and functional perspectives. *Trends Plant Sci,* 2005, vol. 10, 170-177
- **GRUNEWALD W ; FRIML J.** The march of the PINs: developmental plasticity by dynamic polar targeting in plant cells. *EMBO J,* 2010, vol. 29, 2700-2714
- **WISNIEWSKA J ; XU J ; SEIFERTOVA D ; BREWER PB ; RUZICKA et al.** Polar PIN localization directs auxin flow in plants. *Science,* 2006, vol. 312, 883
- **MULLER A ; GUAN C ; GALWEILER L ; TANZLER P ; HUIJSER P et al.** AtPIN2 defines a locus of Arabidopsis for root gravitropism control. *EMBO J,* 1998, vol. 17, 6903-6911
- **OTTENSCHLÄGER I ; WOLFF P ; WOLVERTON C ; BHALERAO RP ; SANDBERG G et al.** Gravity-regulated differential auxin transport from columella to lateral root cap cells. *Proc Natl Acad Sci U S A,* 2003, vol. 100, 2987-2991
- **BLILOU I ; XU J ; WILDWATER M ; WILLEMSEN V ; PAPONOV I et al.** The PIN auxin efflux facilitator network controls growth and patterning in Arabidopsis roots. *Nature (London,* 2005, vol. 433, 39-44
- **HANSON AD ; GREGORY JF, 3RD.** Folate biosynthesis, turnover, and transport in plants. *Annu Rev Plant Biol,* 2011, vol. 62, 105-125
- **MEINKE DW ; MEINKE LK ; SHOWALTER TC ; SCHISSEL AM ; MUELLER LA et al.** A sequence-based map of Arabidopsis genes with mutant phenotypes. *Plant Physiology,* 2003, vol. 131, 409-418
- **PATTON DA ; SCHETTER AL ; FRANZMANN LH ; NELSON K ; WARD ER et al.** An embryo-defective mutant of arabidopsis disrupted in the final step of biotin synthesis. *Plant Physiol,* 1998, vol. 116, 935-946
- **SRIVASTAVA AC ; RAMOS-PARRA PA ; BEDAIR M ; ROBLEDO-HERNANDEZ AL ; TANG Y et al.** The folylpolyglutamate synthetase plastidial isoform is required for postembryonic root development in Arabidopsis. *Plant Physiol,* 2011, vol. 155, 1237-1251
- **KUTSCHERA U ; BERGFELD R ; SCHOPFER P.** Cooperation of Epidermis and Inner Tissues in Auxin-Mediated Growth of Maize Coleoptiles. *Planta,* 1987, vol. 170, 168-180
- **DHONUKSHE P ; HUANG F ; GALVAN-AMPUDIA CS ; MÄHÖNEN AP ; KLEINE-VEHN J et al.** Plasma membrane-bound AGC3 kinases phosphorylate PIN auxin carriers at TPRXS(N/S) motifs to direct apical PIN recycling. *Development,* 2010, vol. 137, 3245-3255
- Molecular cloning: a Laboratory Manual. 1989
- **FEYS BJ ; WIERMER M ; BHAT RA ; MOISAN LJ ; MEDINA-ESCOBAR N et al.** Arabidopsis SENESCENCE-ASSOCIATED GENE101 stabilizes and signals within an ENHANCED DISEASE SUSCEPTIBILITY1 complex in plant innate immunity. *Plant Cell,* 2005, vol. 17, 2601-2613

- **BREUNINGER H ; RIKIRSCH E ; HERMANN M ; UEDA M ; LAUX T.** Differential expression of WOX genes mediates apical-basal axis formation in the Arabidopsis embryo. *Dev Cell,* 2008, vol. 14, 867-876
- **CLOUGH SJ ; BENT AF.** Floral dip: a simplified method for Agrobacterium-mediated transformation of Arabidopsis thaliana. *Plant J,* 1998, vol. 16, 735-743
- **CAMARA D ; BISANZ C ; BARETTE C ; VAN DAELE J ; HUMAN E et al.** Inhibition of p-Aminobenzoate and Folate Syntheses in Plants and Apicomplexan Parasites by Natural Product Rubreserine. *Journal of Biological Chemistry,* 2012, vol. 287, 22367-22376
- **DITENGOU FA ; TEALE WD ; KOCHERSPERGER P ; FLITTNER KA ; KNEUPER I et al.** Mechanical induction of lateral root initiation in Arabidopsis thaliana. *Proc Natl Acad Sci U S A,* 2008, vol. 105, 18818-18823